# EUROPEAN PATENT APPLICATION

(11) **EP 4 443 297 A1**
(43) Date of publication of application: **09.10.2024**
(21) Application number: 22923549.4
(22) Date of filing: 16.12.2022
(51) Int. Cl.: G06F 9/54

(54) **INTER-APPLICATION INFORMATION SHARING METHOD AND TERMINAL**

(30) Priority: 27.01.2022 CN 202210103386
(71) Applicant: Huawei Technologies Co., Ltd., Shenzhen, Guangdong 518129 (CN)
(72) Inventor: BIAN, Chao, Shenzhen, Guangdong 518129 (CN)
(74) Representative: Gill Jennings & Every LLP
(86) International application number: PCT/CN2022/139535
(87) International publication number: WO 2023/142763

(57) **Abstract**

An inter-application information sharing method and a terminal are provided, to improve efficiency of information sharing between different applications and simplify an operation of a user. The method includes: The terminal displays a first interface of a first application; when it is detected that the user performs a first operation on a first interface element in the first interface, the terminal displays a first window, where the first window displays an interface of a sharing application, and is used to prompt that the sharing application is enabled and the first interface element is stored in the sharing application; after the terminal detects a second operation, the terminal displays a second interface of a second application and the first window, where the first window displays a second interface element, and the second interface element includes at least a part of content of the first interface element; and when it is detected that the user performs a third operation on the second interface element in the first window, the terminal displays a third interface of the second application, where the third interface includes a third interface element, and the third interface element is used to present content of the second interface element.

## Description

This application claims priority to Chinese Patent Application No. 202210103386.3, filed with the China National Intellectual Property Administration on January 27, 2022 and entitled "INTER-APPLICATION INFORMATION SHARING METHOD AND TERMINAL", which is incorporated herein by reference in its entirety.

### TECHNICAL FIELD

This application relates to the field of terminal technologies, and in particular, to an inter-application information sharing method and a terminal.

### BACKGROUND

With an increasing quantity of applications on a terminal, there is an increasing quantity of requirements for information sharing between applications.

Currently, some simple methods for sharing text, pictures, and the like are provided on the terminal. For example, a user may copy selected text in an application 1, and then switch to an application 2 to paste the text, to implement text sharing. For another example, the user may select a picture in the application 1, save the selected picture to a local gallery application, then switch to the application 2, and import the picture in the gallery application into the application 2, to implement picture sharing; or the user may select a picture in the application 1, select a sharing function, and share the selected picture to the application 2, to implement picture sharing.

It may be figured out that, when there is abundant or diverse shared information, or shared information comes from a plurality of applications, or shared information is shared to a plurality of applications, the user needs to repeatedly switch between a plurality of applications to perform a related operation. It can be learned that a conventional inter-application information sharing method is cumbersome and can share limited types of information.

### SUMMARY

This application provides an inter-application information sharing method and a terminal, to improve efficiency of information sharing between different applications and simplify an operation of a user. To achieve the foregoing objectives, embodiments of this application provide the following technical solutions.

According to a first aspect, an inter-application information sharing method is provided and is applied to a terminal. The method includes: The terminal displays a first interface of a first application, where the first interface includes a first interface element. The terminal detects a first operation performed on the first interface element. The terminal displays a first window in response to detecting the first operation, where the first window displays a fourth interface of a third application, the fourth interface prompts that the third application is enabled, and the first interface element of the first application is stored in the third application. The terminal detects a second operation, where the second operation is used to enable a second application or switch to a second interface of the second application. The terminal displays the second interface of the second application in response to detecting the second operation; and the terminal further displays the first window (it should be understood that: The terminal may display an interface of the second application and the first window at the same time, may always display the first window after the first window is enabled, and then display the second interface of the second application after responding to the second operation, or may first display the second interface of the second application and then display the first window after responding to the second operation), where the first window displays a fifth interface of the third application, the fifth interface of the third application includes a second interface element, and the second interface element includes at least a part of content of the first interface element. A third operation performed by a user on the second interface element in the first window is received. The terminal displays a third interface of the second application in response to receiving the third operation, where the third interface includes a third interface element, the third interface element is used to present content of the second interface element, and the third interface element is the same as or different from the second interface element.

It may be learned that the user may directly perform the first operation on the first interface element (that is, a shared object) in the first interface of the first application, to enable the third application (that is, a sharing application), and store the first interface element in the third application. In some other examples, in a scenario in which the third application is enabled before the user performs the first operation, the first operation directly triggers a procedure of storing the first interface element in the third application.

In the third application, the second interface element is a copy of the first interface element, and may include all or a part of content of the first interface element. Then, the content of the second interface element is inserted into an interface of the second application by using the third application. The third interface element in the second application is obtained based on the second interface element, and the third interface element may be the same as or different from the second interface element.

In conclusion, the third application is equivalent to a transit station for information sharing between the first application and the second application. It may be understood that, when there are a plurality of content/types of shared objects, shared objects are from a plurality of applications (to be specific, a quantity of first applications is greater than 1), or shared objects are shared to a plurality of applications (to be specific, a quantity of second applications is greater than 1), the user does not need to repeatedly switch between a plurality of applications to perform a related operation. It may be learned that this solution improves efficiency of information sharing between different applications, and simplifies an operation of the user.

In addition, in a process in which the shared object is stored in the sharing application, the first application is always run in the foreground. In other words, an operation of storing the shared object in the sharing application by the user does not affect normal running of the first application.

In a possible implementation, before the first window displays the fifth interface of the third application, the method further includes: The terminal detects a fourth operation performed by the user on the first window, where the fourth operation is used to display an interface element in the third application.

When the first window displays the fourth interface of the third application, it may be considered that the third application is in an interface in a folded state (or referred to as a shrunk state or a pull-up state) and an interface in a folded state (or referred to as a shrunk state or a pull-up state). The user may open, through the fourth operation performed on the first window, an interface that is obtained when the third application is in an expanded state, that is, the fifth interface. The fifth interface includes shared objects stored in the third application, and includes the second interface element.

In a possible implementation, the method further includes: receiving a fifth operation performed by the user on the second interface element in the first window, where the fifth operation is different from the third operation. The terminal displays a sixth interface of the third application in response to receiving the fifth operation of the user, where the sixth interface is used to edit the second interface element in the third application.

In other words, the third application further provides an editing interface that is for the shared object stored in the third application. The user may perform modification, deletion, or another operation on the shared objects in the third application.

In a possible implementation, the method further includes: receiving a sixth operation performed by the user on the first window, where the sixth operation is used to exit the third application. The terminal does not display the first window in response to receiving the sixth operation.

Therefore, a method for exiting the third application is provided.

In a possible implementation, when the second interface of the second application supports insertion of an interface element of a type corresponding to the second interface element, the third interface element is the same as the second interface element. When the second interface of the second application does not support insertion of the interface element of the type corresponding to the second interface element, the third interface element is an interface element obtained after the third application or the second application performs conversion based on the second interface element.

In other words, the third application or the second application may automatically modify a format and/or a type of a to-be-inserted second interface element based on a type of an interface element that an insertion location supports inserting, to improve a success rate of sharing of the shared object.

In a possible implementation, the first interface element includes a text control; and the second interface element includes a text control, where the second interface element includes a part of text in the first interface element, and composition of text in the second interface element is different from composition of text in the first interface element.

In other words, in this embodiment of this application, text content may be shared. In some examples, the shared text content may be a part of content of a specific text control. In some other examples, the third application may further adjust composition of stored text.

In a possible implementation, composition of text in the third interface element is different from the composition of the text in the second interface element.

In other words, the second application may adaptively adjust composition of inserted text (the shared object).

In a possible implementation, the first interface element includes a text control and a picture control, and the second interface element includes a text control and a picture control.

In other words, the user may store content of a plurality of controls in the third application at a time through the first operation, thereby improving sharing efficiency.

In a possible implementation, the first interface element includes a video control; and the second interface element includes a video control, where a state of a video in the second interface element is the same as a state of a video in the first interface element, and the state of the video includes at least one of a playback state, a non-playback state, or a playback progress.

In other words, in a video sharing scenario, a video stored in the third application may be kept in a playback state of the video in the first application.

In a possible implementation, when the second interface of the second application supports insertion of an interface element of a video type, the third interface element includes a video control. When the second interface of the second application does not support insertion of the interface element of the video type, the third interface element includes a video link or at least one picture control.

In other words, in a video sharing scenario, a shared video may be converted into a connection or a plurality of pictures based on that the second interface of the second application supports insertion of the interface element of the video type.

In a possible implementation, the first interface element includes a card and/or a mini program; and the second interface element includes a card and/or a mini program, where data of the card and/or the mini program in the first interface element is the same as data of the card and/or the mini program in the second interface.

The card and/or the mini program include/includes a UI control, logic code between UI controls, a related resource, and the like. In other words, a shared object (for example, a card and/or a mini program) that is of a programmed algorithm type and that is stored in the third application may be manually refreshed or automatically refreshed, so that data of the card and/or the mini program in the third application is consistent with data of the card and/or the mini program in the first application.

In a possible implementation, the third interface element includes a card and/or a mini program, where data of the card and/or the mini program in the third interface element is the same as the data of the card and/or the mini program in the first interface element.

In a possible implementation, that the terminal displays a first window in response to detecting the first operation includes: The terminal displays the third application in response to detecting the first operation. The first application sends information about the first interface element to the third application. The third application generates the second interface element based on the information about the first interface element, where the information about the first interface element includes one or more of a type of the first interface element, a location of the first interface element in the first interface, content of the first interface element, and a state of the first interface element. The state of the interface element includes a selected state and an unselected state.

According to a second aspect, a terminal is provided, including a processor, a memory, and a touchscreen. The memory and the touchscreen are coupled to the processor, the memory is configured to store computer program code, the computer program code includes computer instructions, and when the processor reads the computer instructions from the memory, the terminal is enabled to perform the method according to the foregoing aspect and any one of the possible implementations of the foregoing aspect.

According to a third aspect, an apparatus is provided. The apparatus is included in a terminal, and the apparatus has a function of implementing behavior of the terminal in any method according to the foregoing aspects and the possible implementations. The function may be implemented by hardware, or may be implemented by executing corresponding software by hardware. The hardware or the software includes at least one module or unit corresponding to the foregoing function, for example, a receiving module or unit, a display module or unit, and a processing module or unit.

According to a fourth aspect, a computer-readable storage medium is provided, including computer instructions. When the computer instructions are run on a terminal, the terminal is enabled to perform the method according to the foregoing aspects and any one of the possible implementations of the foregoing aspects.

According to a fifth aspect, a graphical user interface on a terminal is provided. The terminal includes a display, a camera, a memory, and one or more processors. The one or more processors are configured to execute one or more computer programs stored in the memory, and the graphical user interface includes a graphical user interface displayed when the terminal performs the method according to the foregoing aspects and any one of the possible implementations of the foregoing aspects.

According to a sixth aspect, a computer program product is provided. When the computer program product is run on a computer, the computer is enabled to perform the method according to the foregoing aspects and any one of the possible implementations of the foregoing aspects.

According to a seventh aspect, a chip system is provided, including a processor. When the processor executes instructions, the processor performs the method according to the foregoing aspects and any one of the possible implementations of the foregoing aspects.

### BRIEF DESCRIPTION OF DRAWINGS

FIG. 1 is a schematic diagram of a structure of a terminal according to an embodiment of this application;
FIG. 2A is a schematic diagram of a software structure of a terminal according to an embodiment of this application;
FIG. 2B is a schematic diagram of a software structure of another terminal according to an embodiment of this application;
FIG. 2C is a schematic diagram of a software structure of still another terminal according to an embodiment of this application;
FIG. 2D is a schematic diagram of animation effect provided by an animation effect module according to an embodiment of this application;
FIG. 2E is a schematic diagram of an implementation mechanism of an animation effect module according to an embodiment of this application;
FIG. 3(1) to FIG. 3(3) are schematic diagrams of interfaces of some terminals related to an inter-application information sharing method according to an embodiment of this application;
FIG. 4(1) to FIG. 4(3) are schematic diagrams of interfaces of some other terminals related to an inter-application information sharing method according to an embodiment of this application;
FIG. 5A(1) to FIG. 5A(4) are schematic diagrams of interfaces of still some other terminals related to an inter-application information sharing method according to an embodiment of this application;
FIG. 5B is a schematic diagram of interfaces of still some other terminals related to an inter-application information sharing method according to an embodiment of this application;
FIG. 6(1) to FIG. 6(4) are schematic diagrams of interfaces of still some other terminals related to an inter-application information sharing method according to an embodiment of this application;
FIG. 7(1) to FIG. 7(4) are schematic diagrams of interfaces of still some other terminals related to an inter-application information sharing method according to an embodiment of this application;
FIG. 8A(1) to FIG. 8A(4) are schematic diagrams of interfaces of still some other terminals related to an inter-application information sharing method according to an embodiment of this application;
FIG. 8B(1) to FIG. 8B(3) are schematic diagrams of interfaces of still some other terminals related to an inter-application information sharing method according to an embodiment of this application;
FIG. 9(1) to FIG. 9(4) are schematic diagrams of interfaces of still some other terminals related to an inter-application information sharing method according to an embodiment of this application;
FIG. 10(1) to FIG. 10(4) are schematic diagrams of interfaces of still some other terminals related to an inter-application information sharing method according to an embodiment of this application;
FIG. 11 is a schematic diagram of interfaces of still some other terminals related to an inter-application information sharing method according to an embodiment of this application;
FIG. 12(1) to FIG. 12(3) are schematic diagrams of interfaces of still some other terminals related to an inter-application information sharing method according to an embodiment of this application;
FIG. 13(1) to FIG. 13(3) are schematic diagrams of interfaces of still some other terminals related to an inter-application information sharing method according to an embodiment of this application;
FIG. 14(1) to FIG. 14(4) are schematic diagrams of interfaces of still some other terminals related to an inter-application information sharing method according to an embodiment of this application;
FIG. 15(1) and FIG. 15(2) are schematic diagrams of interfaces of still some other terminals related to an inter-application information sharing method according to an embodiment of this application;
FIG. 16(1) to FIG. 16(4) are schematic diagrams of interfaces of still some other terminals related to an inter-application information sharing method according to an embodiment of this application;
FIG. 17(1) and FIG. 17(2) are schematic diagrams of interfaces of still some other terminals related to an inter-application information sharing method according to an embodiment of this application;
FIG. 18(1) to FIG. 18(3) are schematic diagrams of interfaces of still some other terminals related to an inter-application information sharing method according to an embodiment of this application;
FIG. 19A to FIG. 19D are schematic diagrams of interfaces of still some other terminals related to an inter-application information sharing method according to an embodiment of this application;
FIG. 20 is a schematic flowchart of an inter-application information sharing method according to an embodiment of this application;
FIG. 21 is a schematic flowchart of another inter-application information sharing method according to an embodiment of this application; and
FIG. 22 is a schematic diagram of a chip system according to an embodiment of this application.

### DESCRIPTION OF EMBODIMENTS

In the descriptions of embodiments of this application, unless otherwise stated, "/" means "or", for example, A/B may represent A or B. The term "and/or" in this specification describes only an association relationship between associated objects, and indicates that three relationships may exist. For example, A and/or B may represent three cases: Only A exists, both A and B exist, and only B exists.

In the following description, the terms "first" and "second" are merely intended for a purpose of description, and shall not be interpreted as indicating or implying relative importance or implying a quantity of indicated technical features. Therefore, a feature defined with "first" or "second" may explicitly or implicitly include one or more features. In the descriptions of embodiments of this application, unless otherwise specified, "a plurality of" means two or more than two.

In embodiments of this application, the word "example", "for example", or the like is used to represent giving an example, an illustration, or a description. Any embodiment or design described by "example" or "for example" in embodiments of this application should not be construed as being more preferred or advantageous than another embodiment or design. To be precise, the word "example", "for example", or the like is intended to present a related concept in a specific manner.

For example, a terminal in embodiments of this application may be a mobile phone, a tablet computer, a personal computer (personal computer, PC), a personal digital assistant (personal digital assistant, PDA), a smartwatch, a netbook, a wearable terminal, an augmented reality (augmented reality, AR) device, a virtual reality (virtual reality, VR) device, a vehicle-mounted device, a smart screen, a smart car, or a smart speaker, or the like. A specific form of the terminal is not specifically limited in this application.

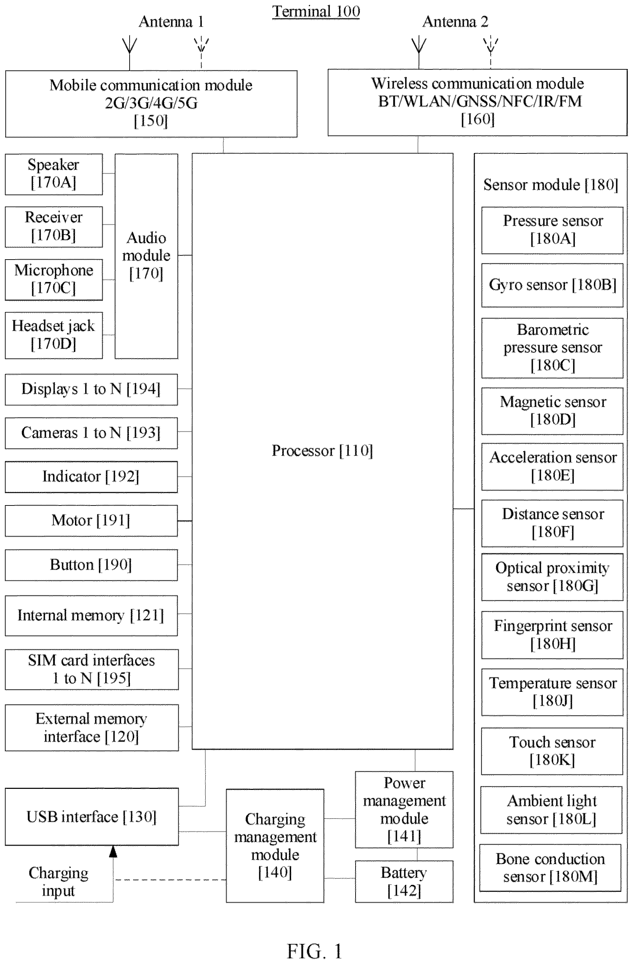

FIG. 1 is a schematic diagram of a structure of a terminal 100.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive a charging input from a charger.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor.

The application processor outputs a sound signal by an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The terminal 100 implements a display function by using the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute program instructions to generate or change display information.

The terminal 100 may implement an image shooting function by using the ISP, the camera 193, the video codec, the GPU, the display 194, the application processor, and the like.

The external memory interface 120 may be used to connect to an external memory card, for example, a micro SD card, to extend a storage capability of the terminal 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound play function and an image play function), and the like. The data storage area may store data (for example, audio data and a phone book) and the like created when the terminal 100 is used. In addition, the internal memory 121 may include a high-speed random access memory, and may further include a nonvolatile memory, for example, at least one magnetic disk storage device, a flash storage device, and a universal flash storage (universal flash storage, UFS). The processor 110 runs instructions stored in the internal memory 121 and/or instructions stored in the memory disposed in the processor, to perform various function applications and data processing of the terminal 100.

The terminal 100 may implement an audio function, for example, music playing and recording, by using the audio module 170, the speaker 170A, the receiver 170B, the microphone 170C, the headset jack 170D, the application processor, and the like.

A software system of the terminal 100 may use a layered architecture, an event-driven architecture, a microkernel architecture, a microservice architecture, or a cloud architecture. The terminal 100 may use an Android system, a HarmonyOS system, or the like. In this embodiment of the present invention, an Android system of a layered architecture is used as an example to describe a software structure of the terminal 100.

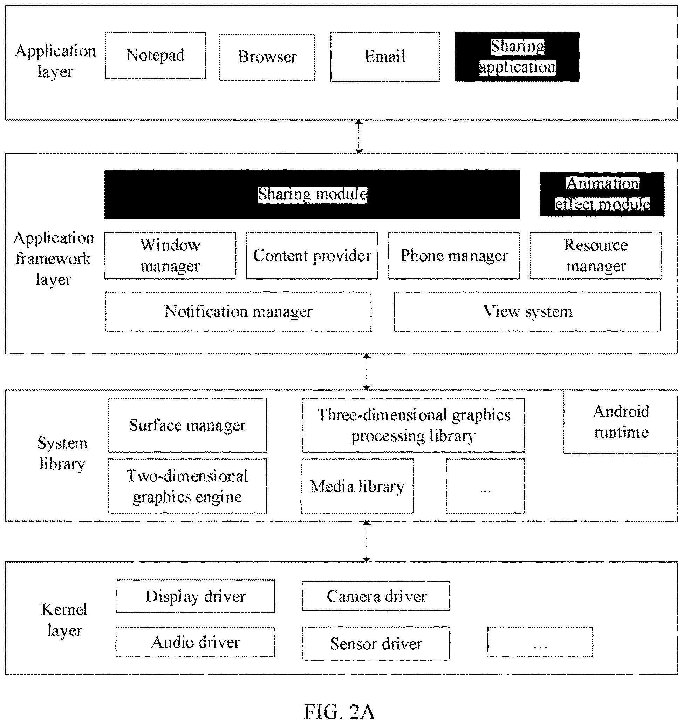

FIG. 2A is a block diagram of a software structure of the terminal 100 according to an embodiment of the present invention.

In a layered architecture, software is divided into several layers, and each layer has a clear role and task. The layers communicate with each other through a software interface. In some embodiments, the Android system is divided into four layers from top to bottom: an application layer, an application framework layer, Android runtime (Android runtime) and a system library, and a kernel layer.

The application layer may include a series of application packages. As shown in FIG. 2A, the application package may include another application, for example, a notepad, an email, or a browser.

In some embodiments of this application, the application package may further include a sharing application, configured to provide a user interface in an information sharing process between applications, a user interface used to manage information stored in the sharing application, for example, editing and deleting, and the like. For example, the sharing application may implement information sharing between applications by invoking the sharing module described below.

The application framework layer provides an application programming interface (application programming interface, API) and a programming framework for an application at the application layer. The application framework layer includes some predefined functions.

As shown in FIG. 2A, the application framework layer may include basic system services provided by the Android system, for example, a window manager, a content provider, a view system, a phone manager, a resource manager, and a notification manager. The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like. The view system includes visual controls such as a control for displaying text and a control for displaying a picture. The view system may be configured to construct an application. A display interface may include one or more views. For example, a display interface including a short message service message notification icon may include a view for displaying text and a view for displaying a picture. The phone manager is configured to provide a communication function for the terminal 100, for example, management of a call status (including answering, declining, or the like). The resource manager provides various resources such as a localized character string, an icon, a picture, a layout file, and a video file for an application. The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, an alert sound is played, the terminal vibrates, or the indicator light blinks.

In some embodiments of this application, the application framework layer may further include a sharing module, configured to implement information sharing between different applications. Specifically, the sharing module may be configured to implement information sharing between different applications on the terminal 100, or may implement information sharing between same or different applications between the terminal 100 and another terminal. In a specific implementation, the sharing module may be invoked by an application at an upper layer (for example, the application layer) in a manner of a system interface. Optionally, the sharing module may be upgraded with a version upgrade of an operating system.

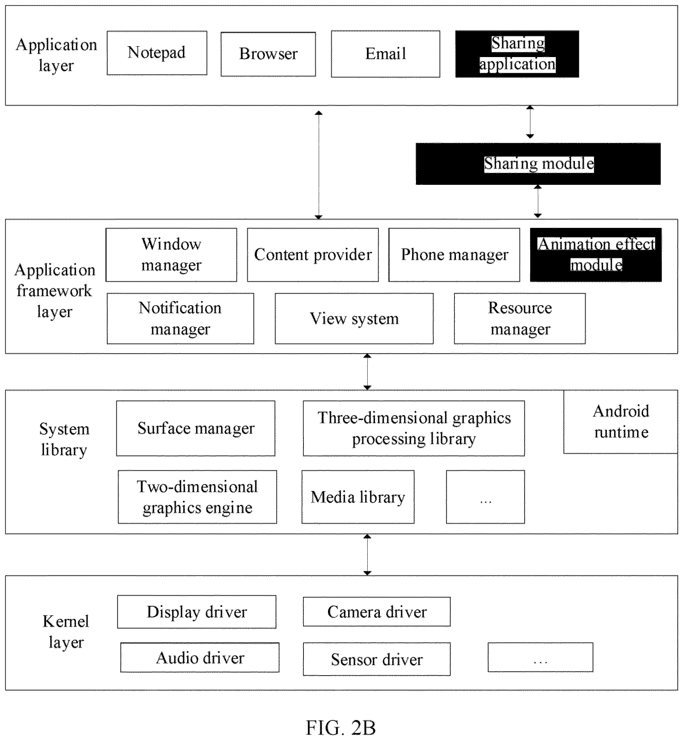

It should be noted that, in some other embodiments, as shown in FIG. 2B, the sharing module may alternatively be located between the application layer and the application framework layer. Optionally, the sharing module may be upgraded with a version upgrade of an operating system.

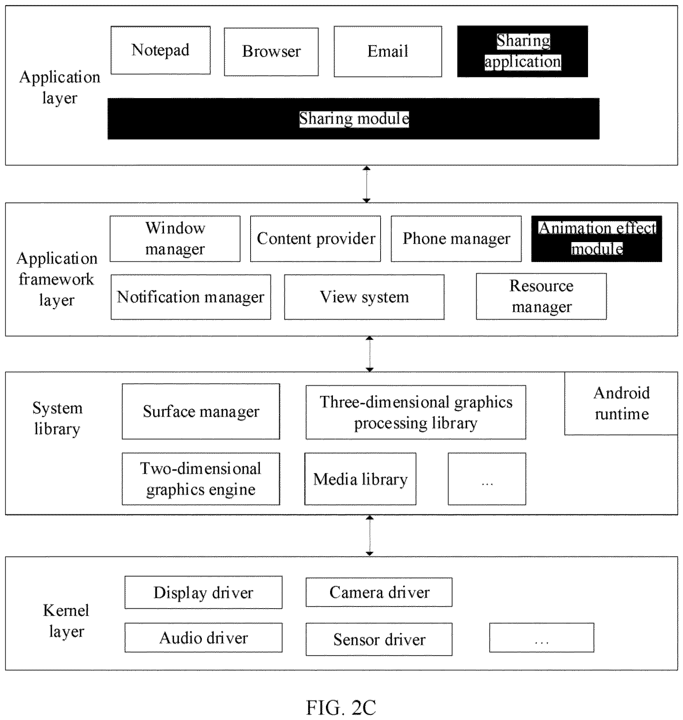

In still some other embodiments, as shown in FIG. 2C, the sharing module may alternatively be located at the application layer. Optionally, the sharing module may alternatively be integrated with the sharing application or another application. In a specific implementation, the sharing application or another application may be integrated into an installation package of the sharing application in a form of an AAR file (a binary archive file of an Android library project) or a JAR file (a file that aggregates a large quantity of Java class files, related metadata, and resources). A version of the sharing module may be upgraded independently, or may be upgraded with a version upgrade of an application.

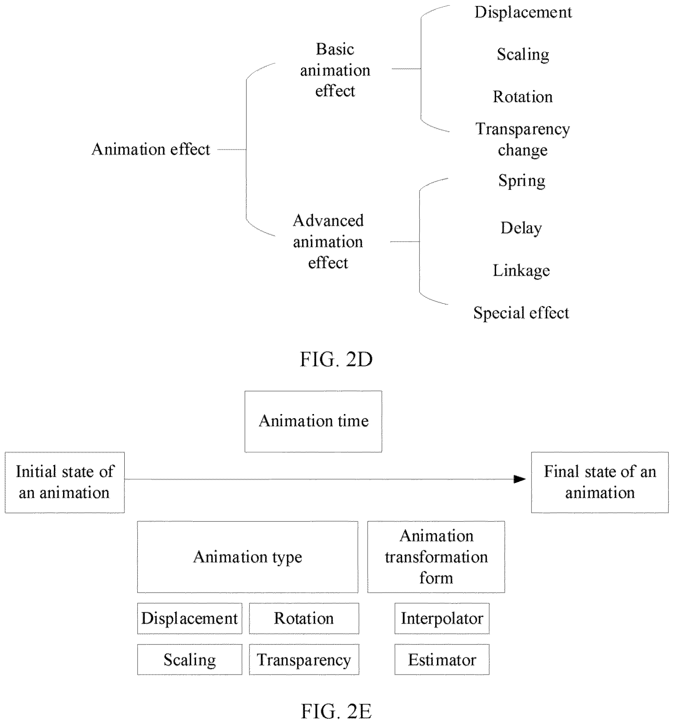

Optionally, the application framework layer may further include an animation effect module, which may be configured to provide an animation effect function for each application (for example, the first application, the second application, or the sharing application below) at an upper layer (that is, the application layer) and a system service (for example, the sharing module) at a current layer (that is, the application framework layer). To be specific, an interface presentation function with animation effect is provided. In an example, as shown in FIG. 2D, animation effect that can be provided by the animation effect module includes basic animation effect and advanced animation effect. The basic animation effect includes animation effect such as displacement, scaling, rotation, and a transparency change of an interface element (for example, a control, a window, a widget, or a webview). The advanced animation effect includes animation effect such as spring pop-up, a delay change, a linkage change with another interface element, and another special effect that are presented by a motion manner of an interface element. In other words, in this application, any animation effect may be provided for an interface change in an inter-application information sharing process by using the animation effect module, to prompt an information sharing function that is between applications and that is performed by the user terminal 100.

As shown in FIG. 2E, an example in which the animation effect module implements the basic animation effect is used to describe an implementation principle of the animation effect module. In animation time between an initial state and a final state of an animation, the animation effect module may control an animation type and control an animation transformation form. Specifically, controlling the animation type means controlling an animation transformation type, including displacement (a location of an interface element changes in a linear or non-linear manner), rotation (a location of an interface element changes in a rotation manner), scaling (a size change of an interface element), a transparency change, and the like. Controlling the animation change form means how to determine a value of a related parameter (for example, the location of the interface element, the size of the interface element, and transparency of the interface element) in an animation change process. In a specific implementation, the animation transformation form may be implemented by using an interpolator and an estimator. Optionally, the animation effect module may further control a related parameter of animation time, for example, animation start time, animation end time, and animation duration.

In some other embodiments, the animation effect module may alternatively be located between the application layer and the application framework layer, or the animation effect module may alternatively be located at the application layer.

In some embodiments, the terminal 100 may prompt an information sharing process between applications by using preset animation effect, or may prompt an information sharing process between applications by using animation effect set by the user. This is not limited in this embodiment of this application.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provides fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

All technical solutions in the following embodiments may be implemented in the terminal 100 having the foregoing hardware architecture and software architecture.

According to the technical solution provided in this embodiment of this application, a shared object (that is, shared information) in a first application (which may also be referred to as a source application) on the terminal 100 may be stored in a sharing application, and then the shared object is shared to a second application (which may also be referred to as a target application) by using the sharing application. In other words, the sharing application may be used to temporarily store a to-be-shared shared object. Optionally, the user may further perform modification and another operation on content and/or a format (for example, a file format and content composition) of the shared object stored in the sharing application. Alternatively, the sharing application may automatically perform adaptive modification on the format of the stored shared object, and the like. Alternatively, when the shared object of the sharing application is shared to the second application, the second application may perform adaptive modification on the content or the format of the shared object, and the like. In other words, the shared object stored in the sharing application is editable, and the sharing application or the second application may modify the content and/or the format of the shared object, and the like.

The following describes in detail the technical solutions provided in embodiments of this application with reference to a specific scenario and accompanying drawings by using an example in which the terminal 100 is a mobile phone.

### Scenario 1: Picture-text sharing scenario

In the picture-text sharing scenario, a shared object may be, for example, text (for example, text of a paragraph, text of a plurality of paragraphs, a part of text in a paragraph, or discontinuous text of a plurality of paragraphs), one or more pictures, and a combination of text and a picture.

### (1) The shared object includes a control.

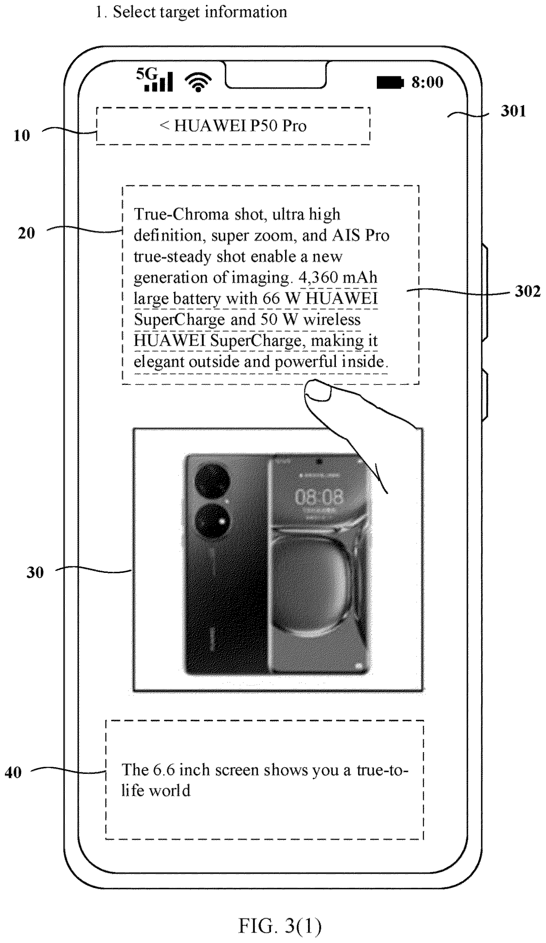

For example, an example in which the shared object is a part of text in a paragraph is used for description. As shown in FIG. 3(1), the mobile phone displays an interface 301. The interface 301 is, for example, a web page in a browser application (that is, a first application), or a reading page of a document in a document application (that is, a first application). When a user wants to share information in the web page or the document, the user may first select to-be-shared information (that is, a shared object), for example, text 302 in the document. Then, the user may perform a preset operation, where the preset operation is used to trigger the mobile phone to enable a sharing function (for example, enabling a sharing application). Alternatively, in a case in which the mobile phone has enabled the sharing application, the preset operation is used to trigger the mobile phone to enable a procedure of storing a new shared object. The preset operation is, for example, any one of predefined touching and holding, double tapping, gravity pressing, knuckle tapping, drawing a preset pattern (for example, a closed pattern or a pattern of a special letter or character) by a finger, three-finger sliding, dragging, or a mid-air gesture. Optionally, the preset operation may alternatively be inputting a specific voice command or the like. A specific form of the preset operation that triggers the mobile phone to enable the sharing function is not limited in this embodiment of this application.

In a specific implementation, after detecting that the user performs an operation of triggering the sharing function (for example, enabling the sharing application), the mobile phone determines the shared object, for example, the first application determines the shared object based on a control included in the current interface and information about the control. In addition, the mobile phone enables the sharing function, for example, enables the sharing application, and the sharing application invokes a sharing module to enable a sharing process. In some examples, the sharing application may be displayed in the interface in a form of a floating window. The floating window may also be referred to as a sharing window, a sharing center, a transit center, or the like. This is not limited in this embodiment of this application. In a specific implementation, the sharing window may be implemented by a floating window of a window manager (Window Manger, VM) at the application framework layer. In some embodiments, the first application obtains an interface element (for example, a control, a window, a widget, and a Web View) included in the interface 301 and information about each interface element. The information about each interface element includes one or more of a type (a text control, a picture control, a button control, and the like) of each interface element, a location (such as coordinates of each vertex) of the interface element, content of the interface element, a state (a selected state, an unselected state, a state that a part of content is selected, and the like) of the interface element, and the like. The following uses an example in which the interface element is a control for description. For example, the interface 301 obtained by the first application includes a control 10 (a title control), a control 20 (a text control), a control 30 (a picture control), and a control 40 (a text control). Further, text information and a text state (a selected state and an unselected state) in the control 20 are obtained. When it is determined that the text 302 in the control 20 is in the selected state, the first application may determine that the text 302 is a shared object. Further, the first application sends related information of the control 20 on which the text 302 is located to the sharing application. The sharing application invokes the sharing module to enable an activity (Activity) component, generates a control of a corresponding type in the activity component based on the control 20 on which the text 302 is located, for example, a text control, and sets content of the text control to the text 302. In some examples, a format of the text 302 in the text control generated by the sharing module may be the same as or different from a format of the text 302 in the control 20 in the first application. Optionally, after receiving the text 302 sent by the first application, the sharing application may be a text editing interface. The user may edit the text 302 through the text editing interface, and then a third application sets the content of a newly created text control based on edited content. In other words, the third application uses the text 302 edited by the user as a shared object stored in the third application. Optionally, the sharing module may further generate a preview of the text control based on the newly generated text control, to prompt the user of preview effect of the shared object stored in the sharing application. It should be noted that, in this embodiment, an example in which the first application determines the shared object is used for description. In another embodiment, the sharing application may alternatively determine the shared object. For example, the first application sends all control information (including control information selected by the user and control information not selected by the user) in the interface 301 to the sharing application, and the sharing application determines the shared object in the interface 301, generates a control corresponding to the shared object, and the like. A method for determining the shared object by the sharing application is the same as a method for determining the shared object by the first application. For other content, refer to descriptions of related content in the foregoing embodiment. Details are not described herein again.

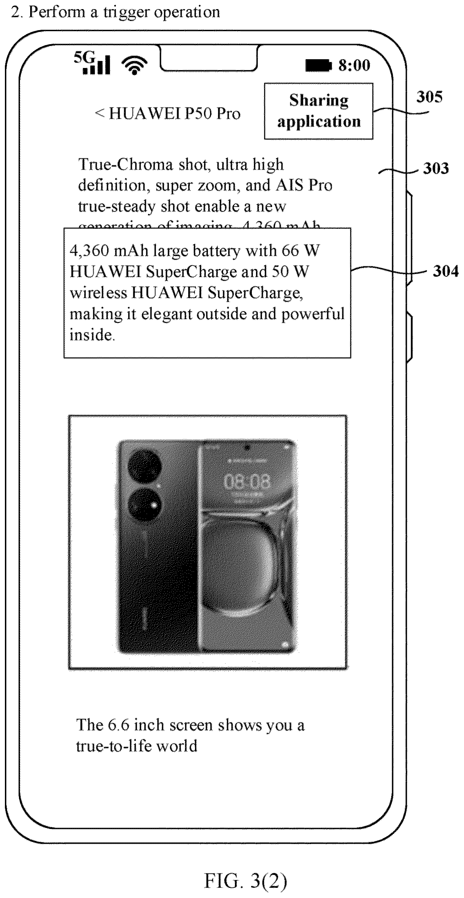

For example, as shown in FIG. 3(2), after detecting that the user performs an operation of triggering a sharing function (for example, enabling the sharing application), the mobile phone displays an interface 303. The interface 303 includes a window 305, and the window 305 is used to prompt that the sharing function of the mobile phone is currently enabled. For example, the sharing application is enabled. In an example, the window 305 may also display a preview of a shared object that is stored in the sharing application, display a preview of a shared object that is newly stored in the sharing application, or the like. A style of the window 305 is not limited in this embodiment of this application. In another example, the mobile phone may display the window 305 at a default location on a screen (for example, the upper right of the screen). Alternatively, the mobile phone may adaptively select, based on a control layout in the current interface (that is, the interface 301 of the first application), for example, a blank or unimportant control location to place the window 305. Alternatively, the user may manually adjust a location of the window 305, for example, drag the window 305 to a sidebar. In a specific implementation, the location of the window 305 may be changed by modifying an attribute value (for example, a location of a floating window) of the floating window. It should be noted that the window 305 may be considered as an interface when the sharing application is in a folded state (or referred to as a shrunk state or a pull-up state), and a window 607 that displays details about the shared object in the sharing application in the following may be considered as an interface when the sharing application is in an expanded state.

Optionally, in the interface 303, the mobile phone may further display a preview 304 of the shared object, and the preview 304 is used to display preview effect of the shared object stored in the sharing application.

In an example, the mobile phone may use specific animation effect to prompt the user to store the shared object in the sharing application. In a specific implementation, with reference to FIG. 2A to FIG. 2C, the sharing application may invoke the animation effect module through the sharing module to implement corresponding animation effect. For example, in the interface 303 shown in FIG. 3(2), the preview 304 moves to a specific area (for example, an area covered by the window 305) at a specific speed, giving visual effect that the preview 304 moves into the sharing application to the user. Alternatively, in a process in which the preview 304 approaches the window 305, the preview 304 gradually shrinks until the preview 304 touches or overlaps the window 305, giving visual effect that the preview 304 is sucked into the sharing application to the user. Alternatively, in a process in which the preview 304 approaches the window 305, the preview 304 rotates at a specific speed until the preview 304 disappears in an area on which the window 305 is located. Alternatively, the user may hold the preview 304 by using a finger, the finger moves in a direction toward the window 305, and the preview 304 moves with a hand, giving visual effect that the preview 304 is dragged to the sharing application to the user. Certainly, the mobile phone may alternatively use another animation effect to prompt that the shared object is stored in the sharing application. This is not specially limited in this embodiment of this application.

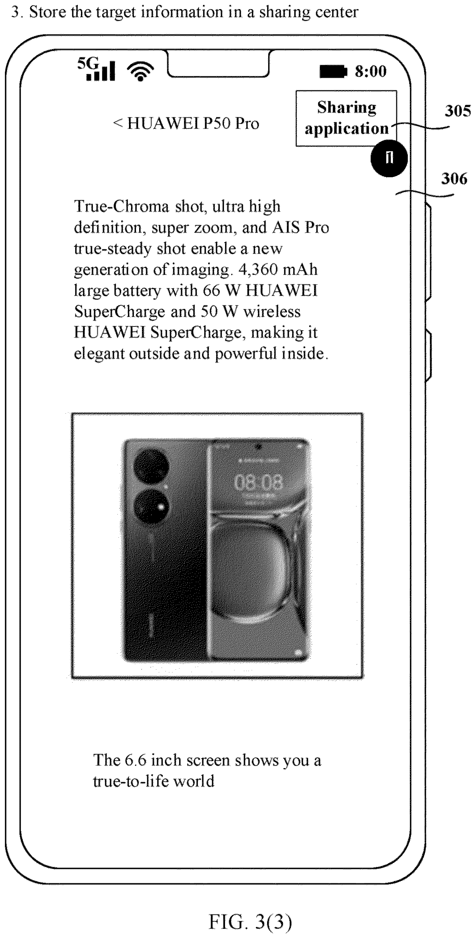

After the shared object in the first application is stored in the sharing application, the mobile phone may display an interface 306 shown in FIG. 3(3). In the interface 306, the window 305 may mark, in a specific manner, that a new shared object is stored. For example, the window 305 displays a subscript icon, and the subscript icon is used to mark a quantity of shared objects stored in the sharing application. After the new shared object is stored, a quantity indicated by the subscript icon of the window 305 is increased by 1. Alternatively, a preview of the stored shared object may be displayed in the window 305.

It may be noted that, in this embodiment, in a process in which the shared object is stored in the sharing application, the first application always runs in the foreground. In other words, an operation of storing the shared object in the sharing application by the user does not affect normal running of the first application.

In addition, the foregoing embodiment is described by using an example in which the user first selects the shared object in the interface 301 and then performs the preset operation for triggering the sharing function. In some other embodiments, alternatively, the user may first perform the preset operation of triggering the sharing function, and then select the shared object. Alternatively, in some scenarios, the user cannot select the shared object in the interface 301. In this case, after the user performs the preset operation of triggering the sharing function, the mobile phone may automatically determine the shared object.

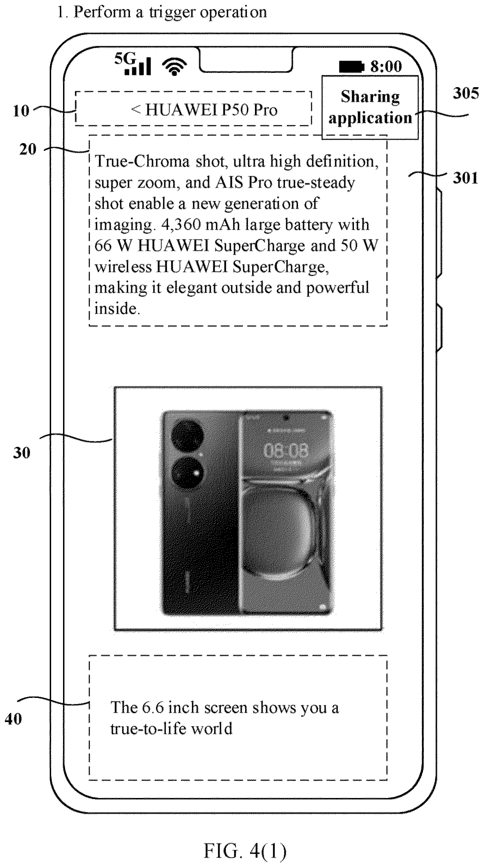

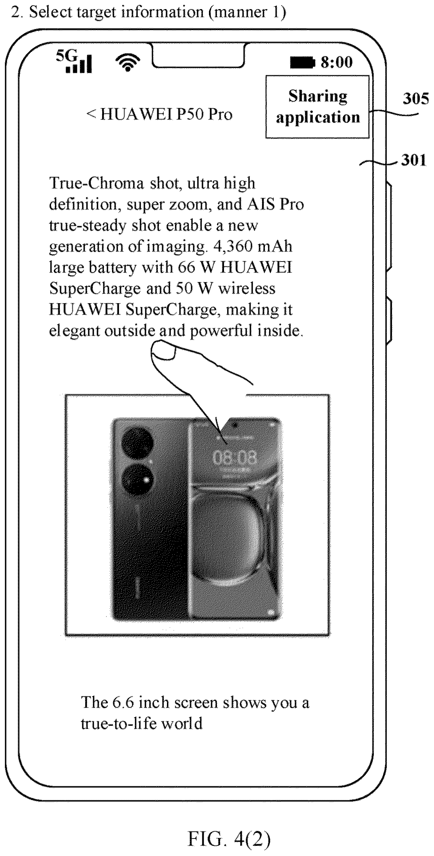

For example, refer to FIG. 4(1) to FIG. 4(3). As shown in FIG. 4(1), after detecting, when the mobile phone displays the interface 301, that the user performs the preset operation of triggering the sharing function, the mobile phone displays the window 305 in the interface 301, where the window 305 is used to prompt the user that the mobile phone has enabled the sharing application. It may be noted that, in this case, no shared object is selected in the interface 301. Then, the user may select a to-be-shared shared object in the interface 301. As shown in FIG. 4(2), the user selects text 302.

In a specific implementation, after detecting that the user performs the preset operation of triggering the sharing function, the mobile phone (for example, specifically the first application) obtains controls included in the interface 301 and information about each control. The information about each control includes one or more of a type (a text control, a picture control, a button control, and the like) of each control, a location (for example, coordinates of each vertex of the control) of the control, content of the control, a state of the control, and the like. For example, the interface 301 obtained by the mobile phone includes a control 10 (a title control), a control 20 (a text control), a control 30 (a picture control), and a control 40 (a text control).

Further, the mobile phone may detect an operation of selecting the shared object by the user, to determine the shared object. In some examples, the user may select a specific control in the interface 301 or select a specific part of content in the control. Therefore, after the user performs the operation of selecting the shared object, a state of a control corresponding to the shared object changes to a selected state. In this case, the mobile phone may determine, based on a state change of the control (an unselected state changes to the selected state), the shared object selected by the user. For example, as shown in FIG. 4(2), when the user selects the text 302 in the control 20, a state of the text 302 in the control 20 changes to the selected state. In this case, the mobile phone may determine that the text 302 is the shared object.

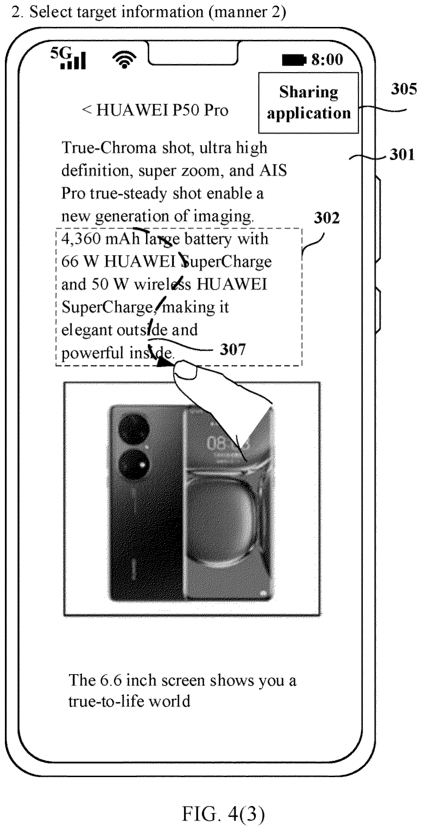

In some other embodiments, the user cannot select a specific control in the interface 301, or cannot select specific content in the control. In this case, the mobile phone may still determine the shared object based on a selection operation performed by the user. The mobile phone has obtained the location of each control in the interface 301, and then may determine, based on a location at which a finger slides when the user performs the selection operation, a control selected by the user or a specific part of content in a specific control, so that the shared object selected by the user may be determined. For example, as shown in FIG. 4(3), after a movement trajectory 307 of the finger of the user on a touchscreen of the mobile phone is detected, it may be determined, based on the movement trajectory 307 and the location of each control in the interface 301, that the shared object selected by the user is the control 20 or the text 302 in the control 20. In conclusion, a specific method for determining the shared object by the mobile phone is not limited in this embodiment of this application.

Then, the sharing application invokes the sharing module to start an activity component, generates a control matching the shared object in the activity, and sets content of the control to be the same as content of the control corresponding to the shared object. For other content, refer to the example shown in FIG. 3(1) to FIG. 3(3). Details are not described herein again.

In some other embodiments, the user may alternatively not need to perform the operation of selecting the shared object. The mobile phone may determine, based on a location at which the user performs the preset operation of triggering the sharing function, that a control corresponding to the location at which the preset operation of triggering the sharing function is performed is the shared object. Alternatively, after the mobile phone does not detect that the user performs the operation of selecting the shared object, the mobile phone may determine that all controls or controls of a specific type (for example, a text control, a video control, a picture control, a mini program, and a card) on a current interface are shared objects. For other content, refer to related descriptions in other embodiments. Details are not described herein again.

It can be learned that the technical solution provided in this embodiment of this application may not be limited to a property of whether a control or control content in the interface 301 can be selected. In other words, regardless of whether the control in the interface 301 can be selected or whether the content in the control can be selected, any content in the interface 301 can be stored in the sharing application in this embodiment of this application, to facilitate subsequent sharing to another application. In other words, in this embodiment of this application, program code of an application (for example, the first application) in which the shared object is originally located is not modified, so that the shared object in the application can be shared to another application.

### (2) The shared object includes a plurality of different types of controls.

In some other embodiments, a user may further select a plurality of controls as shared objects, and store these controls as shared objects in a sharing application at a time, thereby improving efficiency of temporarily storing the shared objects. Types of the plurality of selected controls may be the same or different. The plurality of selected controls may be a plurality of controls that are consecutive in locations, or may be a plurality of controls that are inconsecutive in locations.

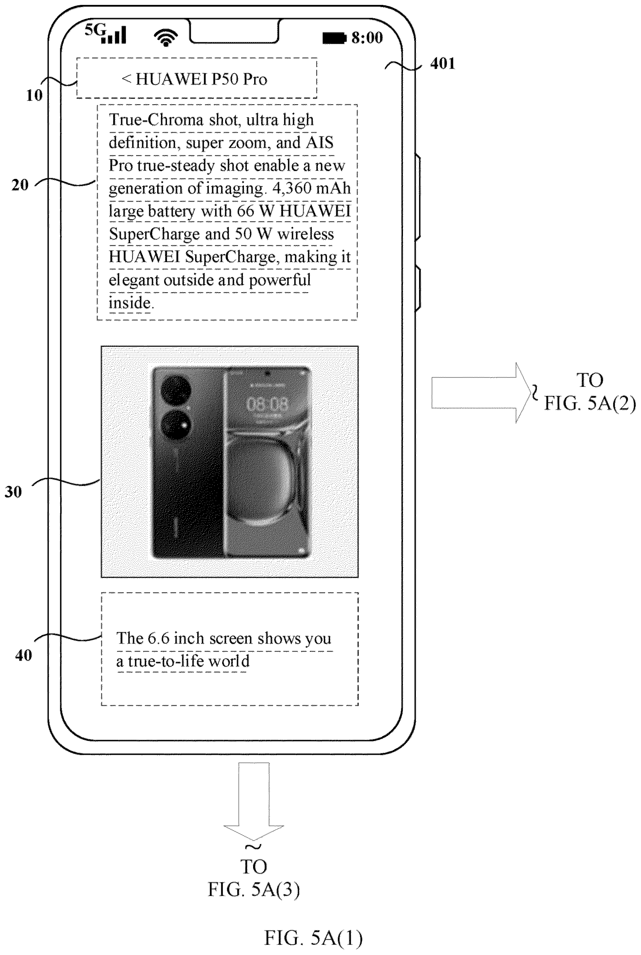

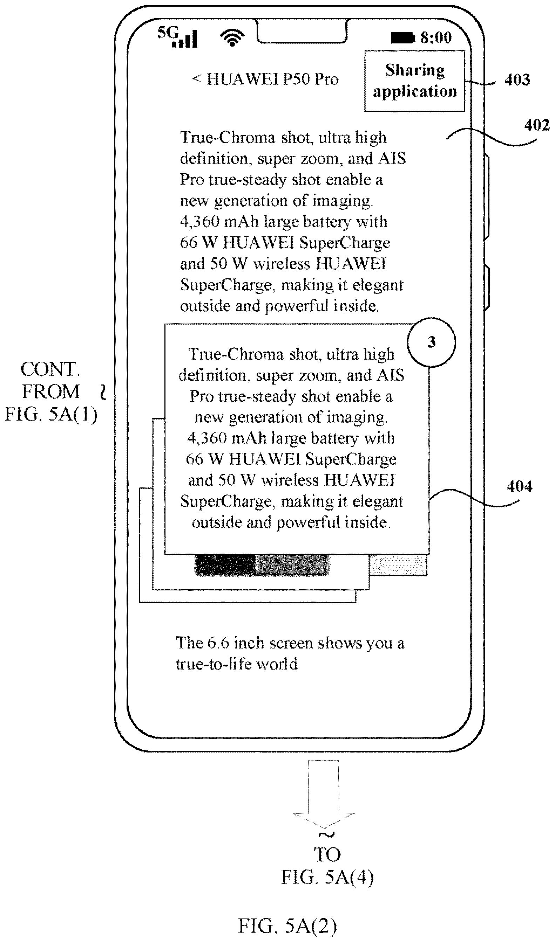

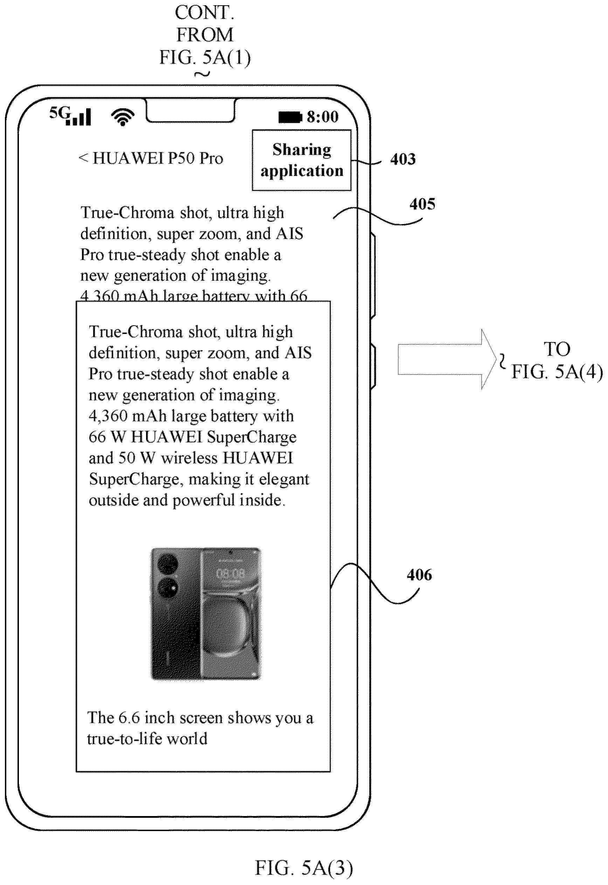

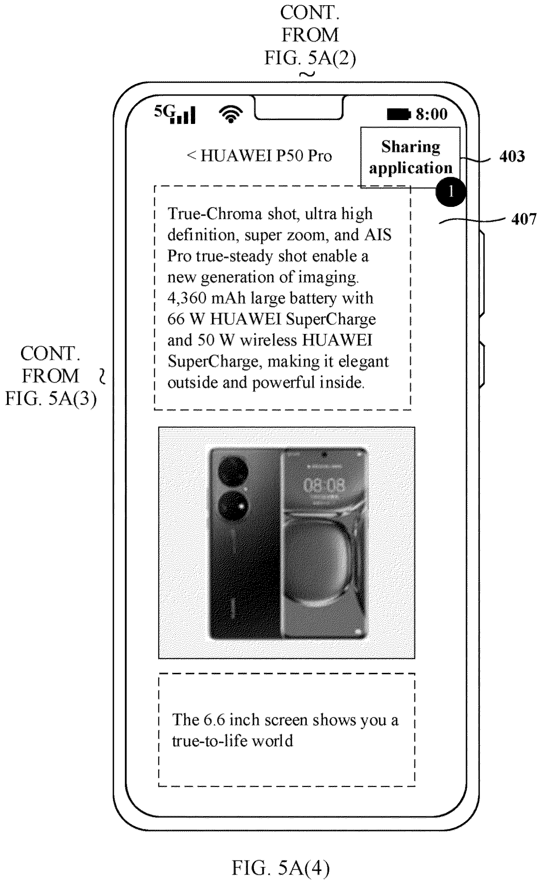

For example, an example in which the shared object includes content of a text control and a picture control is used for description. As shown in FIG. 5A(1), a mobile phone displays an interface 401. A plurality of controls in the interface 401 are selected. For example, a control 20 (a text control), a control 30 (a picture control), and a control 40 (a text control) are in a selected state. In this case, after the mobile phone detects that the user performs a preset operation of triggering a sharing function, the mobile phone obtains the controls included in the interface 401 and information about each control, and determines the control 20 (the text control), the control 30 (the picture control), and the control 40 (the text control) as shared objects. In some other examples, the user may alternatively select the control 20 and the control 40 that are inconsecutive in locations, and then perform the preset operation of triggering the sharing function. The mobile phone may determine the control 20 and the control 40 as shared objects. Alternatively, if the preset operation performed by the user of triggering the sharing function directly acts on the control 20 and the control 40, the mobile phone determines the control 20 and the control 40 as shared objects based on an action location of the preset operation performed by the user of triggering the sharing function.

In an example, the sharing application invokes a sharing module to enable an activity component, and correspondingly newly creates two text controls and a picture control in the activity component. Content of the two newly created text controls is set to content of the control 20 and content of the control 40, and content of the picture control is set to content of the control 30 (for example, may be a specific picture, or may be a network link corresponding to the picture). It should be noted that, layouts of the two text controls and the picture control in the sharing application may be the same as or different from layouts of the control 20, the control 30, and the control 40 in the interface 401. Then, the mobile phone generates a preview based on the content of the two text controls and the picture control. In an example, the mobile phone displays an interface 402 shown in FIG. 5A(2). A window 403 is displayed in the interface 402, and is used to prompt that the sharing application is enabled. A preview 404 is further displayed in the interface 402. Optionally, the preview 404 may present stereoscopic effect and indicate that the shared object includes content of the plurality of controls. For example, the preview 404 may be a superimposed preview of each control in the shared object. Optionally, the preview 404 may further display a quantity of controls included in the shared object. For example, in this example, the shared object includes three controls, and therefore, "3" is displayed on the upper right of the preview 404. Optionally, the preview 404 uses specific animation effect to prompt the user to store the shared object in the sharing application. In another example, the mobile phone may alternatively display an interface 405 shown in FIG. 5A(3), and a preview 406 is displayed in the interface 405. Different from the preview 404 in the interface 402 shown in FIG. 5A(2), the preview 406 displayed in the interface 405 displays content of the three controls included in the shared object in a tile manner. A presentation manner of a preview of the shared object is not limited in this embodiment of this application.

Then, the mobile phone displays an interface 407 shown in FIG. 5A(4), and a quantity indicated by a subscript icon of the window 403 in the interface 407 is increased by 1, to prompt that a shared object that is currently selected is stored in the sharing application. For other content of this embodiment, refer to the foregoing description of related content. Details are not described herein again.

It may be understood that, in this example, a plurality of controls that are stored in the sharing application at a time may be used as a whole. Subsequently, the plurality of controls that are stored in the sharing application this time may be shared to another application at a time, thereby improving sharing efficiency of the shared object.

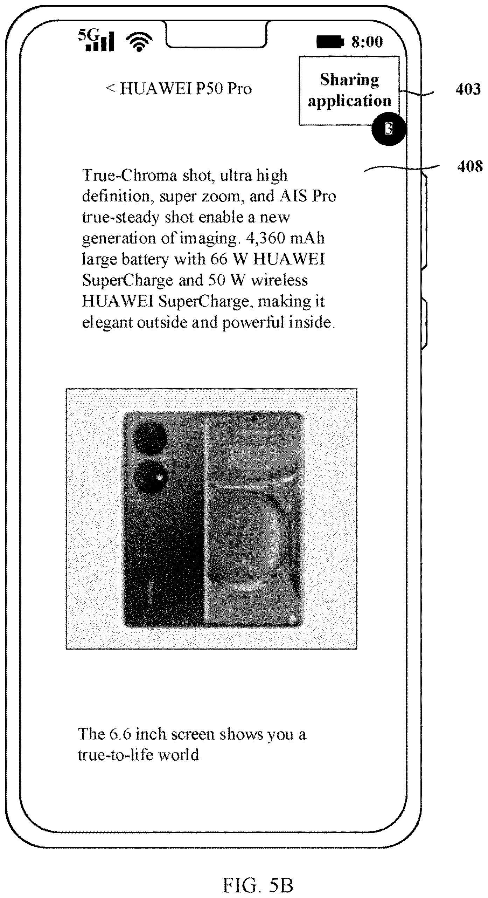

Optionally, in another example, after the mobile phone determines that the control 20 (the text control), the control 30 (the picture control), and the control 40 (the text control) are the shared objects, the mobile phone (specifically, the sharing application invokes the sharing module) may also correspondingly enable three activity components, and each activity component corresponds to one control in the shared object. For other content, refer to descriptions in the foregoing other embodiments. After the shared object is stored in the sharing application, the mobile phone may display an interface 408 shown in FIG. 5B. A quantity indicated by the subscript icon of the window 403 in the interface 408 is increased by 3.

It may be understood that, in this example, the plurality of controls that are stored in the sharing application at a time may be used as independent individuals. Subsequently, the user may select to share one or more controls to another application as required, to meet more sharing requirements.

In conclusion, in this embodiment of this application, content of a plurality of controls of a same type or content of a plurality of controls of different types may be stored in the sharing application at a time, and then the content of the plurality of controls stored in the sharing application may be shared to another application at a time or as required, so that sharing efficiency of the shared object can be improved.

After the shared object is stored in the sharing application, the sharing application may perform modification, deletion, or another operation on the shared object automatically or based on a user indication.

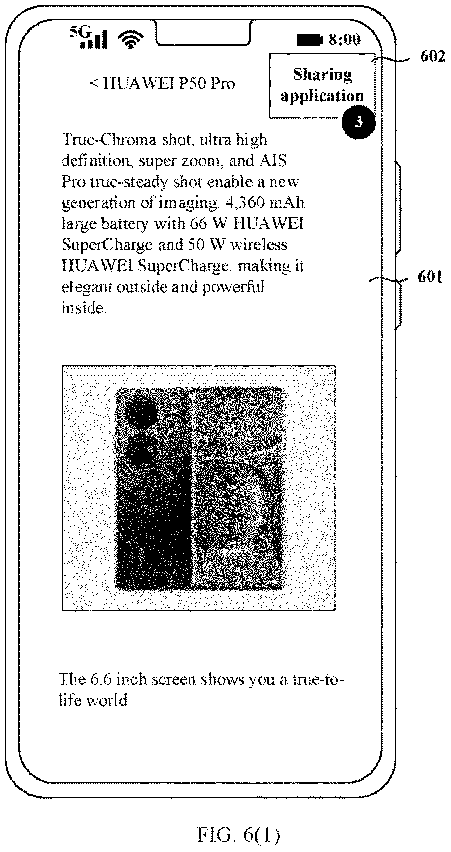

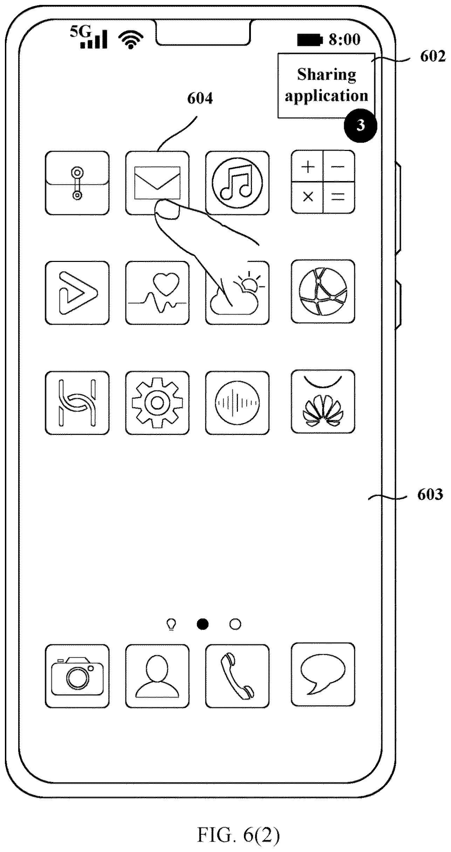

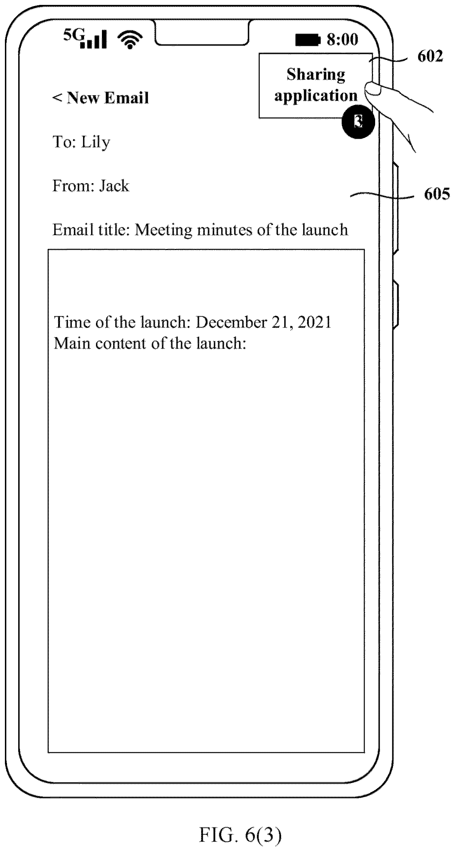

In some examples, as shown in FIG. 6(1), after the user stores the shared object in an interface 601 into the sharing application, the user may expand, by using a window 602 in the current interface, a detail interface of the shared object stored in the sharing application. In some other examples, as shown in FIG. 6(2), the user may alternatively switch from the interface 601 to a home screen 603 of the mobile phone. It can be learned that, in this case, the window 602 is still displayed on the home screen 603 of the mobile phone, and the user may still expand, by using the window 602, the detail interface of the shared object stored in the sharing application. In some other examples, the user may alternatively enable an interface of a second application by using the mobile phone, and expand the detail interface of the shared object stored in the sharing application when the mobile phone displays the interface of the second application. For example, it is detected that the user operates an icon 604 of an email application on the home screen 603 shown in FIG. 6(2), and the mobile phone displays an interface 605 shown in FIG. 6(3). The interface 605 is a new email page. It may be learned that the window 602 is displayed in the interface 605, and the user may still expand, by using the window 602, the detail interface of the shared object stored in the sharing application.

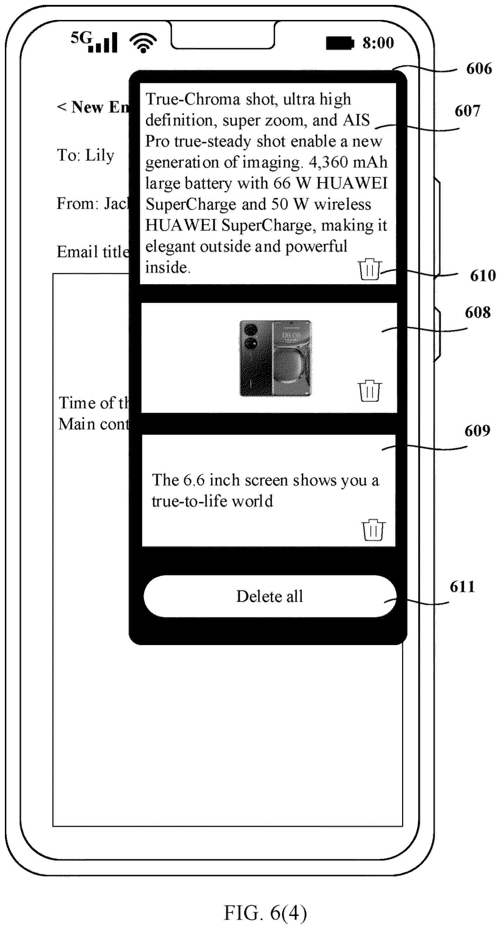

Herein, an example in which the window 602 is operated in the interface 605 of the second application to expand the detail interface of the shared object stored in the sharing application is used for description. For example, in response to detecting that the user performs an operation 1 (for example, single tapping and touching and holding) on the window 602 in the interface 605, the mobile phone displays an interface shown in FIG. 6(4). The interface includes a window 606, used to display information about the shared object stored in the sharing application. In other words, the operation 1 is used to expand detailed information about the shared object stored in the sharing application. The window 606 includes information about shared objects that are stored in the sharing application, for example, a shared object 607, a shared object 608, and a shared object 609. Optionally, the sharing application may further sort, based on a preset rule, shared objects displayed in the window 606. For example, sorting is performed based on a time sequence in which the shared objects are stored in the sharing application, sorting is performed based on types of the shared objects (for example, a text type, a picture type, a video type, a folder type, a mini program type, or a card type), sorting is performed based on file sizes of the shared objects, or sorting is performed based on two or more rule combinations. Sorting of the shared objects in the window 606 is not limited in this embodiment of this application. It should be noted that, the foregoing has described a case in which the user may store a plurality of controls at a time (to be specific, a shared object includes a plurality of controls). Therefore, when the mobile phone sorts the shared objects based on the preset rule, a case in which different controls in a shared object are separated (to be specific, a control of another shared object exists between the plurality of controls in a same shared object) may exist. In this case, the mobile phone may associate the plurality of controls that belong to the same shared object, so that the user may share the plurality of controls stored in the sharing application at a time to the second application at a time. For example, the sharing application includes a shared object 1 and a shared object 2. The shared object 1 includes a control 1 of a first type (for example, a text control) and a control 2 of a second type (for example, a picture control). To be specific, the control 1 and the control 2 are stored by the user in the sharing application at a time. The shared object 2 includes a control 3 (for example, a picture control) of the second type. When the mobile phone performs sorting based on types of the controls, the control 1 of the shared object 1 and the control 3 of the shared object 2 are arranged together, but the control 1 and the control 2 are not arranged together. In an example, the mobile phone may mark the control 1 and the control 2 of the shared object 1, to indicate that the control 1 and the control 2 belong to a same shared object (that is, the shared object 1). Certainly, in some other embodiments, alternatively, the mobile phone may preferably arrange a plurality of controls belonging to the same shared object together, and then another control is sorted by using another rule. For example, the control 1 and the control 2 may overlap together (which may be considered as a whole in a visual sense), and do not overlap with the control 3. After an operation of expanding the control 1 and the control 2 by the user is detected, the control 1 and the control 2 are tiled. To be specific, in this case, the control 1 and the control 2 do not overlap. Certainly, the user may perform an operation again, so that the control 1 and the control 2 overlap again.

Optionally, the mobile phone may further limit a maximum quantity of shared objects displayed in the window 606, to avoid blocking the interface of the first application or the second application when a large quantity of shared objects are displayed in the window 606. When a quantity of shared objects stored in the sharing application is greater than the foregoing maximum quantity, some shared objects that are sorted later may be hidden. The user may view the shared objects that are hidden in a manner, for example, sliding.

Further, the window 606 further includes an operation control for each shared object, for example, a delete control 610 for the shared object 607, and a delete all control 611 for all shared objects. The delete control 610 for the shared object 607 is used to delete the shared object 607 from the sharing application. The delete all control 611 for all shared objects is used to delete all shared objects in the sharing application by one tap. It may be understood that the window 606 may further include another functional control for a shared object.

It should be noted that, because all shared objects stored in the sharing application are independently stored in the sharing application in a form of an interface (for example, an activity), the user may independently perform editing, modification, deletion, and another operation on each shared object. It may be understood that, in this application, the sharing application is an application independent of the first application and the second application. Therefore, the shared object stored in the sharing application is also independent of the first application and the second application. In other words, after a specific shared object is stored in the sharing application, when the first application switches to another interface (the interface no longer includes the shared object), the shared object stored in the sharing application is not affected. Alternatively, the mobile phone exits the first application, resources such as memory occupied by the first application is reclaimed, and the like, and the shared object stored in the sharing application still exists. Similarly, after the user shares a shared object to the second application, when the second application switches to another interface (the interface no longer includes the shared object) or the mobile phone exits the second application, the shared object stored in the sharing application is not affected.

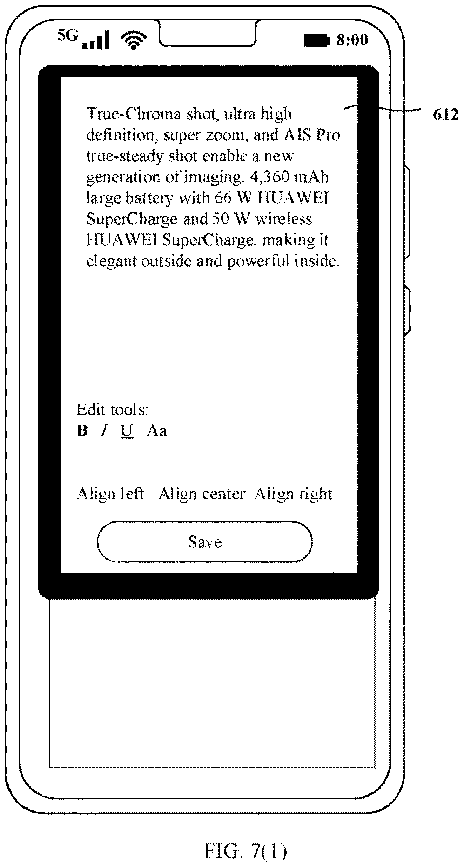

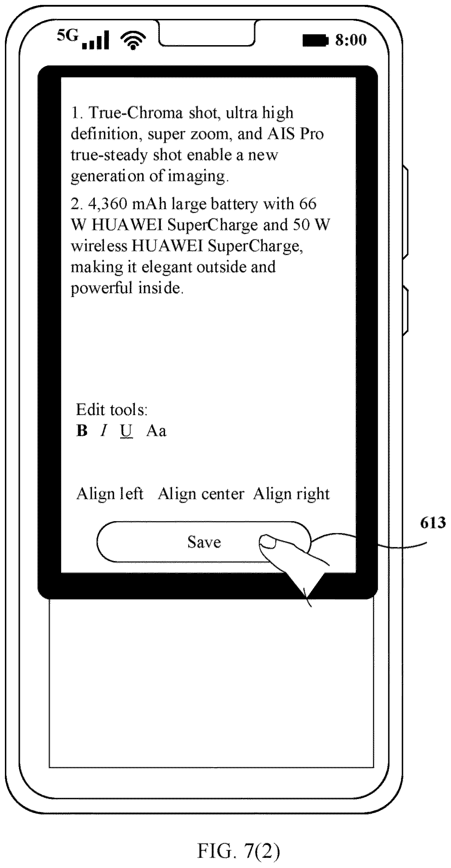

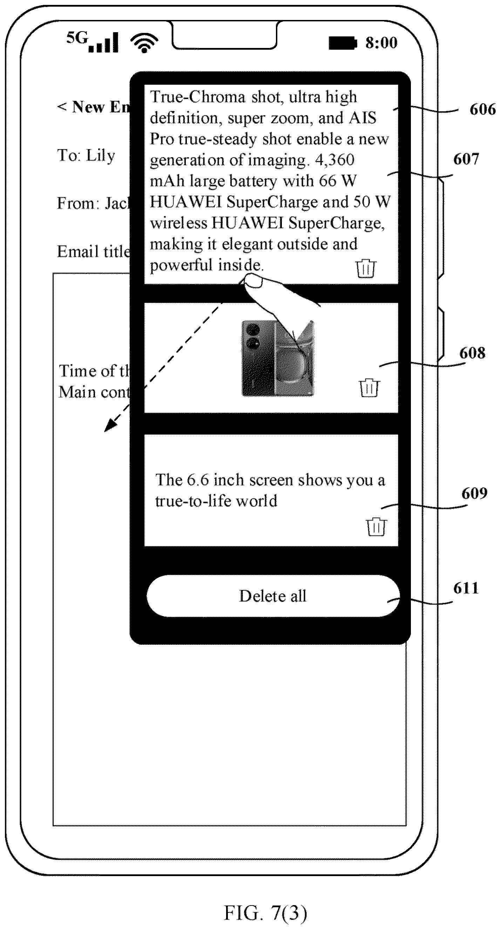

For example, herein, a process in which the user modifies the shared object in the sharing application is described by using an example in which the user modifies the shared object 607. Refer to FIG. 6(4). When it is detected that the user performs an operation 2 (for example, single tapping, touching and holding, and double tapping) on the shared object 607, the mobile phone displays an interface 612 shown in FIG. 7(1). The interface 612 may be used to edit a selected shared object (that is, the shared object 607). In other words, the operation 2 is used to select a shared object and enter an editing interface of the selected shared object. The user may perform adding, deletion, modification, and another operation on content of the shared object on the interface 612, and may further modify a font format (bold, italic, underline, and the like) and a paragraph format (for example, an alignment manner) of text. As shown in FIG. 7(2), after the user modifies the content, the format, and/or the like of the shared object, the user may save the modified content of the shared object by operating a save control 613. After detecting that the user operates the save control 613, the mobile phone may display an interface shown in FIG. 7(3). It may be noted that, at this time, the content and format of the shared object 607 is modified accordingly.

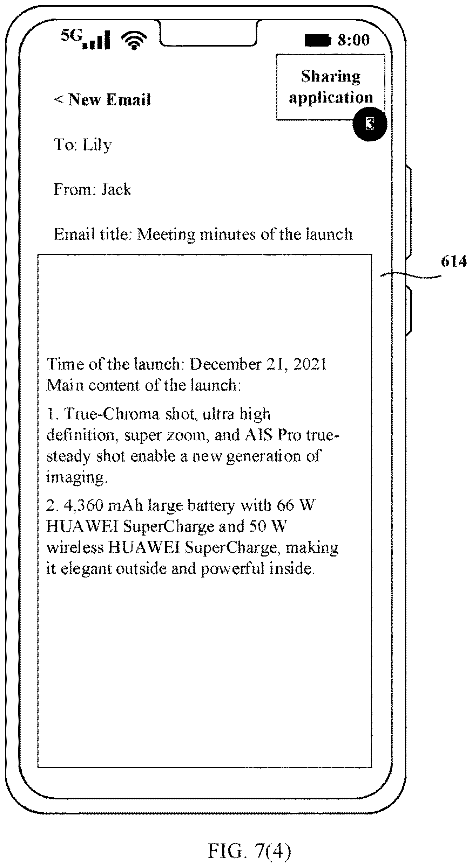

In addition, the user may further select, by using the window 606, a specific shared object in the sharing application and share the shared object to the second application. Still refer to the interface shown in FIG. 7(3), it is detected that the user performs an operation 3 (for example, touching and holding and dragging) on the shared object 607, and the mobile phone shares the shared object 607 to a new email interface of an email application. The operation 3 is used to select a shared object, and share the selected shared object to a specific application. It should be noted that the operation 3 is different from the operation 2. For example, the operation 3 may be specifically holding the shared object 607, dragging the shared object 607 out of the window 606, and dragging the shared object 607 to a specific location in the new email interface of the email application, for example, a location at which the shared object is to be inserted in the new email interface. An interface 614 shown in FIG. 7(4) is an interface of inserting the shared object 607 in the new email interface. In some examples, the sharing application or the second application may adaptively adjust a format (for example, composition) of an inserted shared object based on a feature of a control (for example, a size of the control or existing content of the control) to which an insertion location in the second application belongs. In some other examples, alternatively, the sharing application may automatically convert a type of the shared object based on a feature of the second application. For example, when the second application is a gallery application, the sharing application may convert a shared object of a text control type into a picture, and insert the picture into the second application. For another example, when the second application is a file management application, the sharing application may convert a shared object of the text control type into a file format. For another example, when the second application is a notepad application, the sharing application may perform text recognition on a shared object of a picture type, and insert recognized text into the second application, and the like. Optionally, content converted for the shared object herein may be deleted after current sharing is performed. In a specific implementation, the sharing application may be implemented by invoking a custom interface, for example, conversion of the shared object is implemented based on reconstruction of an Android open source code project (Android Open Source Project, AOSP) Item interface.

In another example, in a process in which the user drags the shared object 607, after the shared object 607 is dragged out of the window 606, the mobile phone may hide the window 606. In this way, the mobile phone may display an entire interface of the second application, so that the user releases a finger at a specific location in the interface, and indicates the mobile phone to insert the content of the shared object at the specific location.

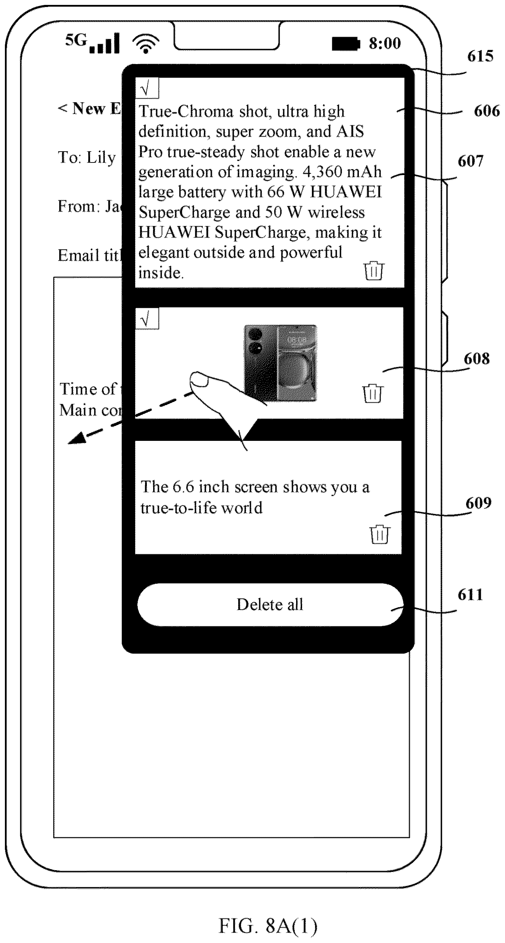

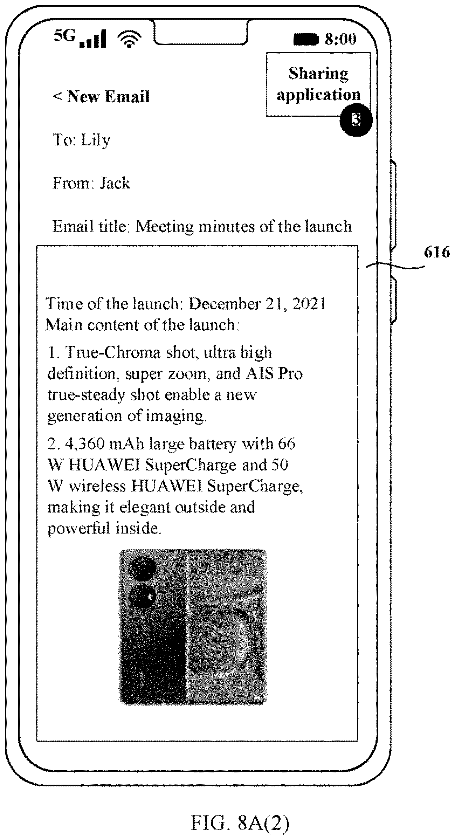

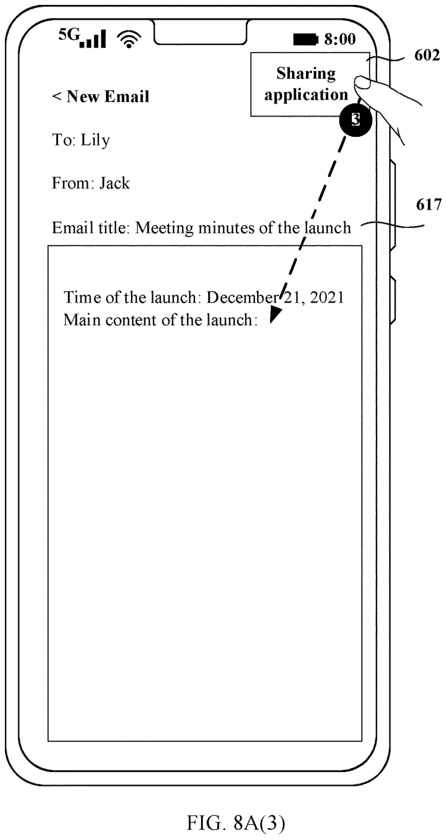

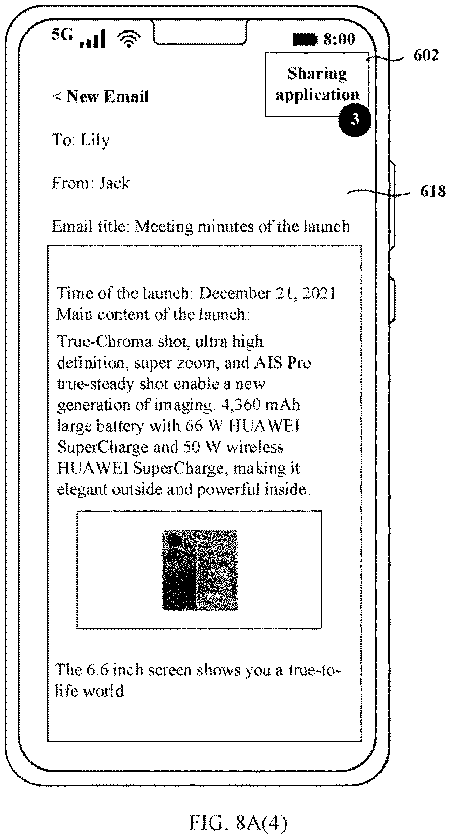

In some other embodiments, the user may select two or more shared objects in the sharing application, and share the shared objects to the second application at a time. For example, as shown in FIG. 8A(1), in the window 606 of the shared object of an interface 615, the user may perform the operation 3 by operating the shared object 607 and the shared object 608. In response to detecting that the user performs the operation 3, the mobile phone displays an interface 616 shown in FIG. 8A(2). A shared object corresponding to the shared object 607 and a shared object corresponding to the shared object 608 are inserted into the interface 616.

In still some other embodiments, the user may further share all shared objects in the sharing application to the second application at a time. For example, in an interface 617 shown in FIG. 8A(3), a detail interface of the shared objects is not expanded on the interface 617. If it is detected that the user performs an operation 4 (for example, dragging, double tapping, and touching and holding) on the window 602, the mobile phone displays an interface 618 shown in FIG. 8A(4), and all shared objects in the sharing application are inserted into the interface 618. In other words, the foregoing operation 4 is used to share all shared objects in the sharing application to another application at a time. It should be noted that the operation 4 is different from the operation 1. For example, the operation 4 may be specifically holding the window 602, and dragging the window 602 to a specific location in the new email interface of the email application, for example, a location at which the shared object is to be inserted in the new email interface.

It should be further noted that the interfaces and related operations of the sharing application shown in FIG. 6(1) to FIG. 6(4), FIG. 7(1) to FIG. 7(4), and FIG. 8A(1) to FIG. 8A(4) are merely examples. The interfaces and related operations in the sharing application are not specifically limited in this embodiment of this application. For example, in the foregoing, an editing interface of a specific shared object may be directly entered by using the window 606, to edit the shared object. In some other examples, alternatively, a management interface (which may be considered as a level-2 interface of the sharing application) of a shared object may be entered by using the window 606 (which may be considered as a level-1 interface of the sharing application). All shared objects in the sharing application are managed by using the management interface, for example, editing, deletion, sharing, grouping, sorting, and another operation.

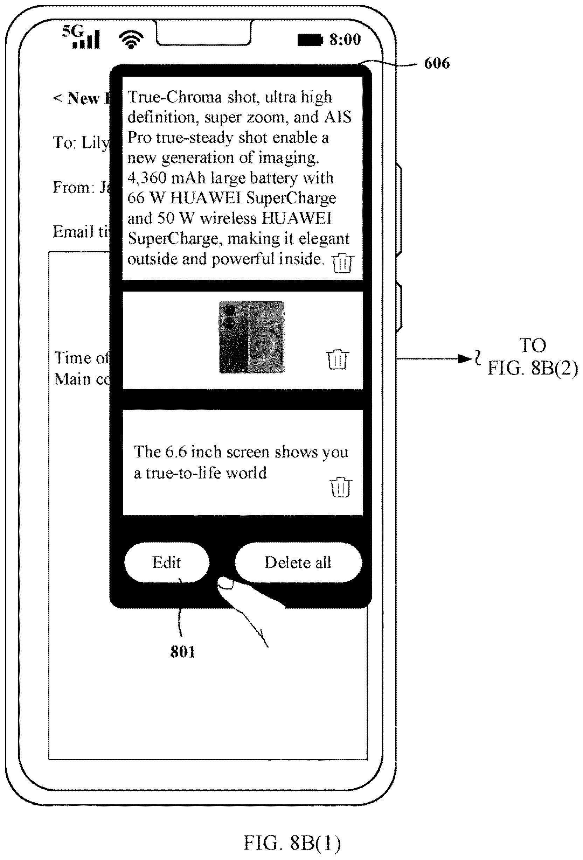

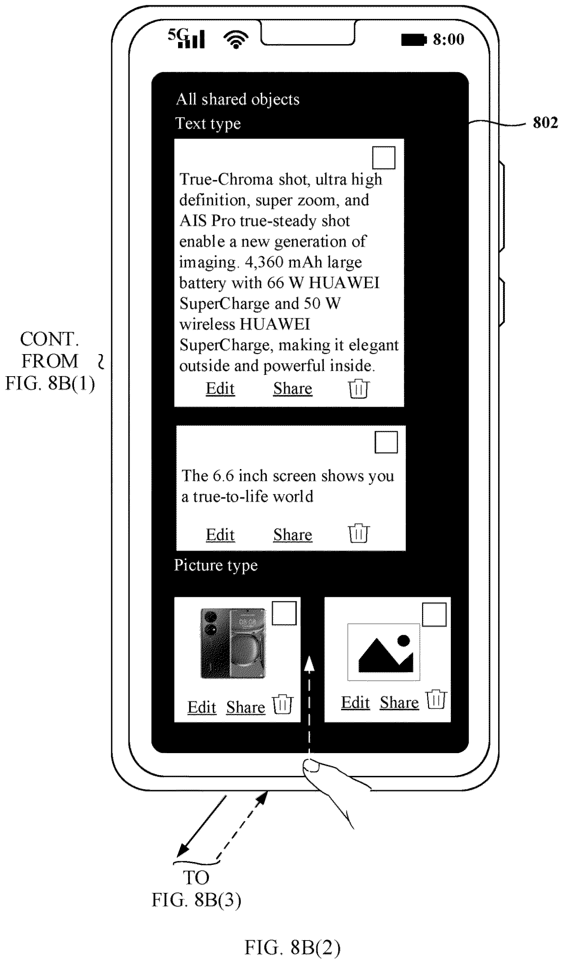

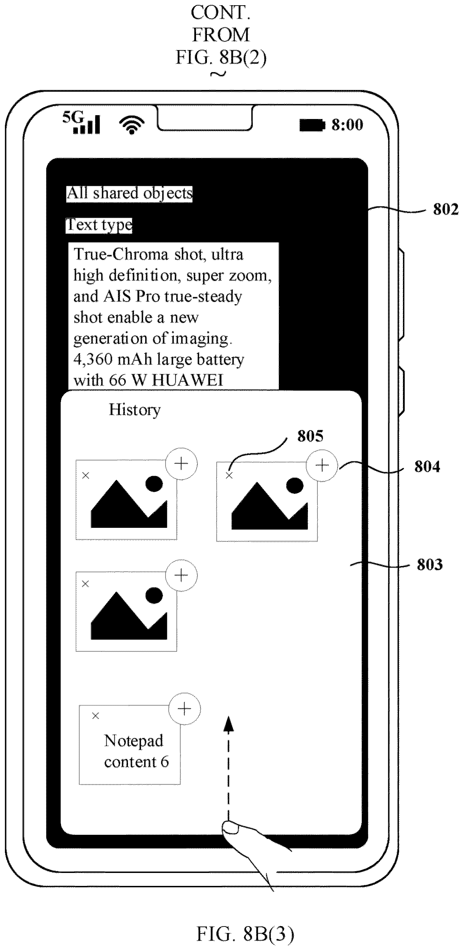

As shown in FIG. 8B(1), the window 606 displayed by the mobile phone includes an edit control 801. In response to detecting that the user operates the edit control 801, the mobile phone displays an editing interface 802 of shared objects shown in FIG. 8B(2). In an example, the shared objects in the editing interface 802 are sorted based on types (for example, a text type, a picture type, a video type, and a program type) of the shared objects. The editing interface 802 includes a functional control for performing an operation on each shared object, for example, an edit control, a share control, and a delete control. The user may edit a corresponding shared object by using these controls. Certainly, the user may further modify sorting, grouping, and the like of each shared object by using the editing interface 802. In another example, the editing interface 802 may not first display the functional control for performing an operation on each shared object. When the mobile phone detects that the user performs a specific operation (for example, a touching and holding operation) on a specific shared object in the editing interface 802, the shared object is selected, and then the mobile phone displays a functional control corresponding to the selected shared object. Certainly, the user may alternatively select a plurality of shared objects, and perform a unified operation on the plurality of selected shared objects at the same time. Related operations are not described here.

Optionally, in some other embodiments, as shown in FIG. 8B(2), after it is detected that the user performs an operation of expanding a history, for example, after the user slides up from the bottom of a screen for a preset distance and then hovers for preset duration (for example, 3 seconds), the mobile phone may display a history 803 shown in FIG. 8B(3). In an example, the history 803 displays a shared object that is stored in the sharing application or that is browsed/shared by the user in recent preset duration (for example, three days), and the shared object has been deleted by the user (to be specific, the shared object is not displayed by the user on the editing interface 802). The user may restore the shared object by using a restore control 804. To be specific, the shared object is re-displayed in the editing interface 802, or the shared object may alternatively be displayed in the window 606. The user may further delete the shared object by using the delete control 805. To be specific, the sharing application deletes the shared object.

Optionally, in still some other embodiments, as shown in FIG. 8B(3), when it is detected that the user performs an operation, for example, the user slides up from the bottom of the screen, the mobile phone exits an interface of the history 803, and the mobile phone displays the interface 802 shown in FIG. 8B(2).

Optionally, when the mobile phone displays the interface 802 shown in FIG. 8B(2), or when the mobile phone displays the interface shown in FIG. 8B(1), the mobile phone detects that the user performs a return/exit operation, and the mobile phone may exit the sharing application. Certainly, the user may alternatively indicate, in another manner, the mobile phone to exit the sharing application. For example, when a window of the sharing application is in a folded state, for example, the window 602 shown in FIG. 8A(4), when an operation that the user holds the window 602 and slides up to drag the window 602 out of the interface is detected, the mobile phone exits the sharing application. Alternatively, after it is detected that the user holds the window 602 for preset duration (in this case, the user does not release the window 602), the mobile phone may display the delete control. When it is detected that the user continues to drag the window 602 to a location of the delete control, the mobile phone exits the sharing application. In conclusion, a manner in which the mobile phone exits the sharing application is not specifically limited in this embodiment of this application.

### Scenario 2: Video sharing scenario

In the video sharing scenario, a shared object includes at least one video. The shared object may be, for example, one or more videos, a combination of a video and text, a combination of a video and a picture, a combination of a video, text, and a picture, and the like.

The shared object includes a video.

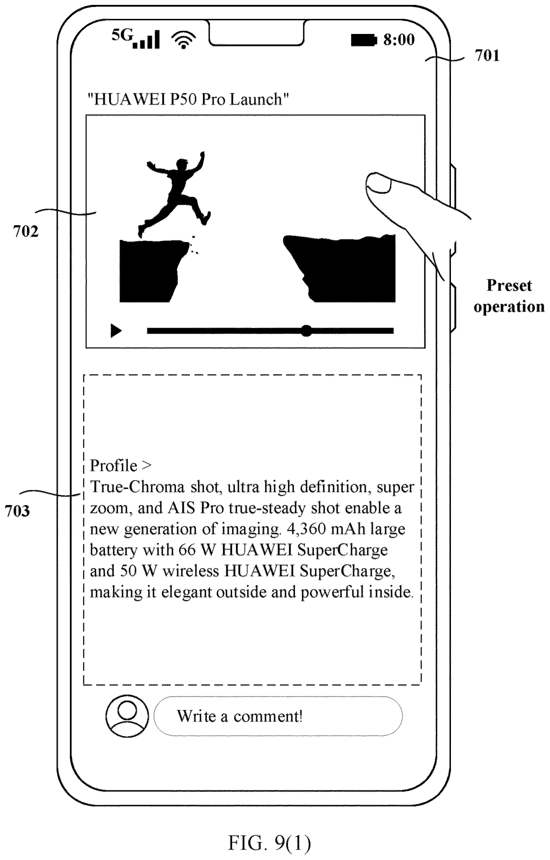

For example, as shown in FIG. 9(1), a mobile phone displays an interface 701 of a first application, including a video control 702 and a text control 703. When the mobile phone detects that a user performs a preset operation of triggering a sharing function on the video control 702, the mobile phone enables the sharing function, and the mobile phone may determine that the video control 702 is a shared object. It should be noted that, in this case, the video control 702 in the interface 701 may be in a non-playback state, may be in a playback state, or may be in a paused state. In other words, when the video control 702 is in any state, the user may store the video control 702 in a sharing application.

In a specific embodiment, the first application of the mobile phone sends content (for example, a play address of a video) of the video control 702 to the sharing application. The sharing application invokes a sharing module to newly create an activity component, generates a video control in the activity component based on the video control 702, and sets content of the video control to content (that is, the play address of the video) of the video control 702 in the first application. It should be noted that, in this case, the newly created video control in the sharing application may retain the playback state and a playback progress of the video control 702 in the first application. To be specific, a playback state and a playback progress of the newly created video control in the sharing application are consistent with the playback state and the playback progress of the video control 702. Alternatively, the newly created video control in the sharing application may alternatively be in a non-playback state by default (to be specific, the playback progress is 0). In some other embodiments, the newly created video control in the sharing application may alternatively be a clip in the video control 702 in the first application. For example, when the video control 702 in the first application is being played, after it is detected that the user performs the preset operation of triggering the sharing function, a third application may record a current playback moment of the video control 702, and capture a video clip of preset duration (for example, 15 seconds) from the current playback moment as content of the newly created video control of the third application. For another example, after it is detected that the user performs the preset operation of triggering the sharing function on the video control 702 in the first application, the third application may directly draw a video editing interface corresponding to the video control 702. In this case, an editing operation on the video control 702 may be received. For example, some clips in the video control 702 are captured to be set as content of the newly created video control of the third application. In other words, the shared object stored in the third application is a clip that is in a shared video and that is selected in the first application.

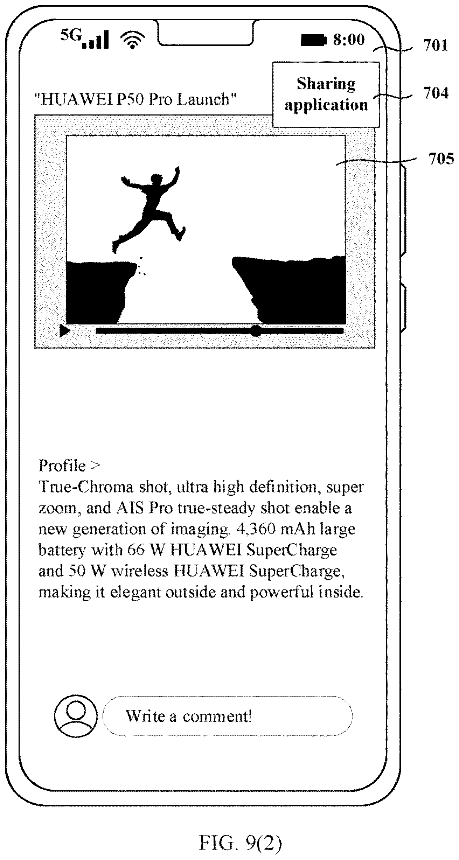

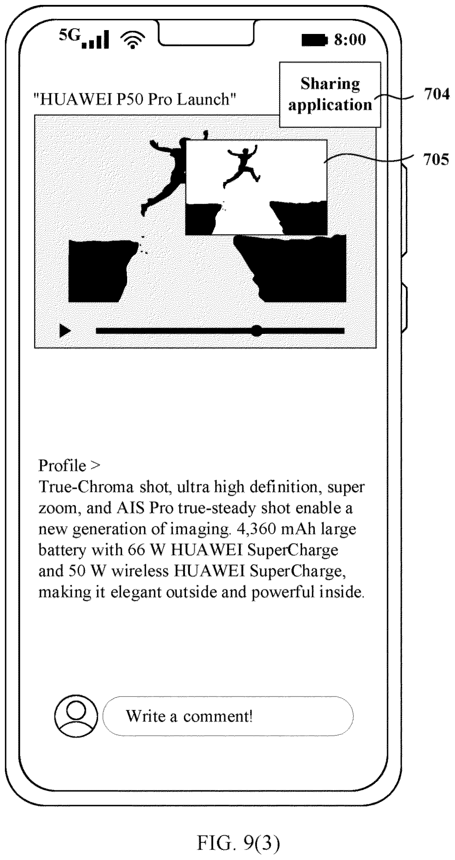

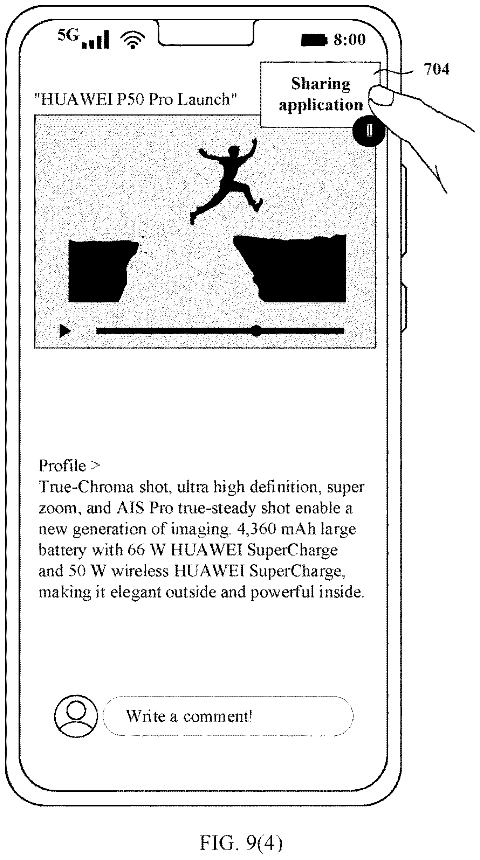

In addition, as shown in FIG. 9(2), the sharing application generates a preview 705 of the newly created video control, and the preview 705 prompts, by using specific animation effect, the user that the shared object is stored in the sharing application. For example, FIG. 9(2), FIG. 9(3), and FIG. 9(4) show animation effect of the preview 704. Specifically, as shown in FIG. 9(2) and FIG. 9(3), the preview 705 gradually decreases and moves toward a window 704. As shown in FIG. 9(4), when a distance between the preview 705 and the window 704 is less than a preset distance value, the preview 705 disappears. Optionally, a quantity indicated by a subscript icon of the window 704 is increased by 1. In general, the animation effect of the preview 705 gives visual effect that the preview 705 is sucked into the window 704 to the user, and is used to notify the user that the shared object is stored in the sharing application.

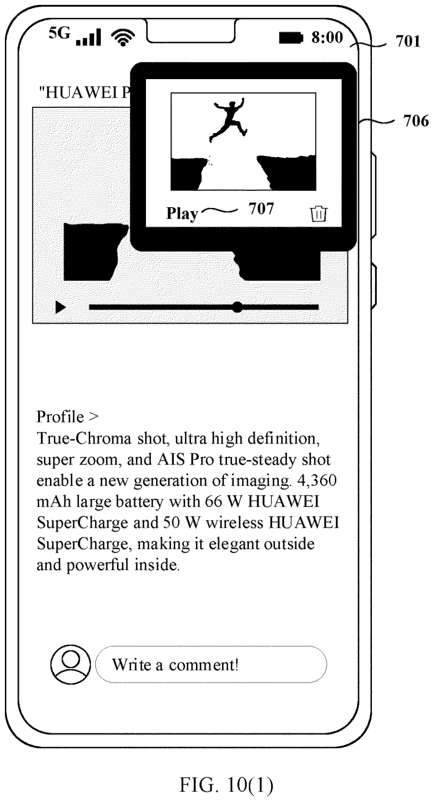

As shown in FIG. 9(4), when it is detected that the user performs an operation 1 on the window 704 of the sharing application, the mobile phone may display a window 706 shown in FIG. 10(1). The window 706 is used to display information about the shared object in the sharing application, for example, display the newly created video control in the sharing application. It may be noted that the window 706 further includes another functional control, for example, a delete control and a play control, for the newly created video control in the sharing application. The play control may indicate to play, in the window 706, the newly created video control in the sharing application. In other words, the user may play a shared object of a video type in the window 706, to view more video content. This helps the user determine, based on the more video content, whether to share the video. Certainly, the window 706 may further include an edit control (not shown in the figure) for the video control. After it is detected that the user operates the edit control, the sharing application may invoke an application/tool that has a video editing function in the mobile phone, a system service related to video editing, or the like, so that the user edits the video control in the sharing application.

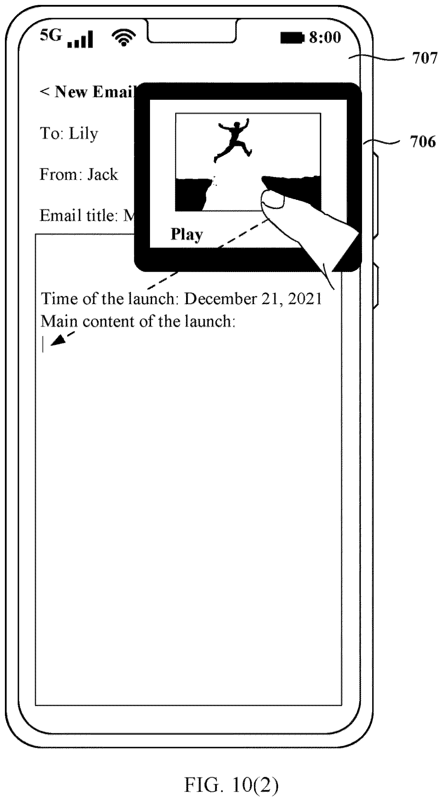

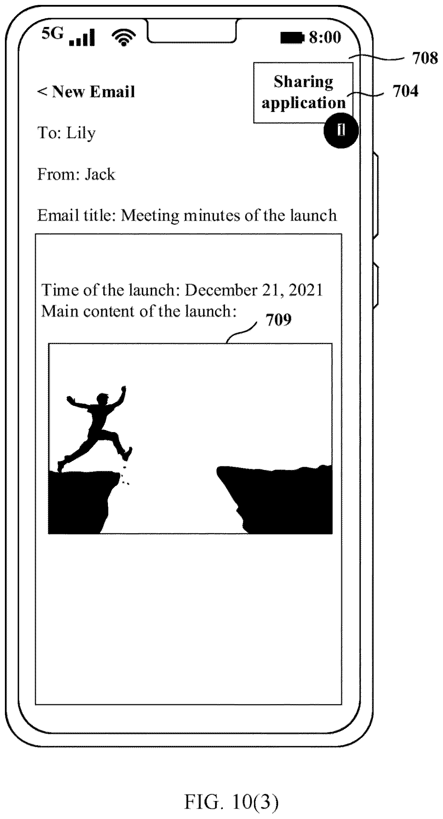

As shown in FIG. 10(2), the mobile phone displays an interface 707 of a second application, for example, a new email interface of an email application. When it is detected that the user performs an operation 3 on the shared object in the window 706, the mobile phone shares a selected shared object to the second application. An interface 708 shown in FIG. 10(3) is an interface of inserting the shared object in the new email interface.

In some embodiments, after the user performs the operation 3 on the shared object in the window 706, the mobile phone may further determine whether an insertion location in the second application supports a control type (for example, a video type) and/or a format (for example, mp4 or wmv) corresponding to the shared object. If the insertion location in the second application supports the control type and/or the format corresponding to the shared object, the mobile phone may directly insert content of the sharing object in the insertion location of the second application. For example, as shown in FIG. 10(3), a location (that is, the insertion location) of a cursor in an email body supports insertion of a video control, and therefore, a shared object of a video type may be directly inserted. In a specific implementation, a declaration may be added to an application package of the second application, and the declaration describes a type of a shared object that the second application supports inserting. In this case, when the sharing application needs to share a specific shared object to the second application, the declaration of the second application may be first obtained, to determine whether a current insertion location supports a type of a to-be-inserted shared object. In another specific implementation, the application package of the second application may not need to add an additional declaration. In this case, when the sharing application needs to share a specific shared object to the second application, information (for example, a type, a feature, and a state of a control) about a control at which the current insertion location in the second application is located may be first obtained, to automatically determine whether the control at which the current insertion location is located supports insertion of a type of the shared object.

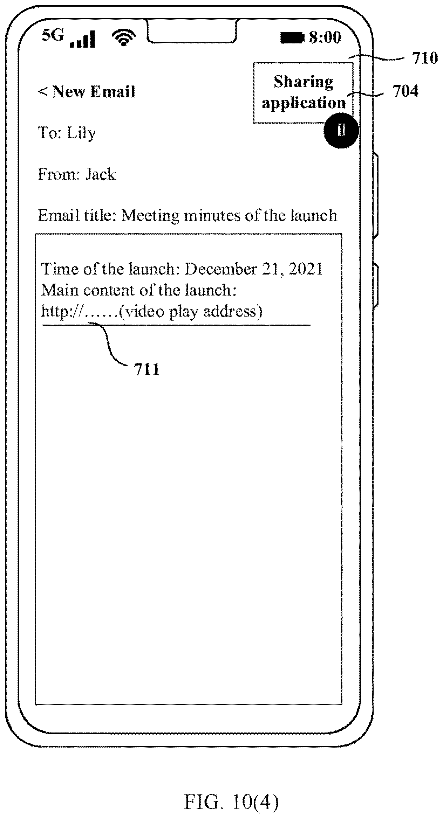

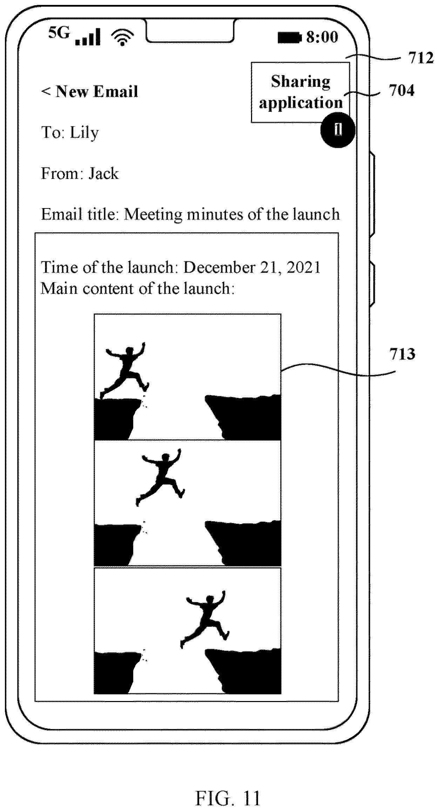

If the control at which the current insertion location is located does not support insertion of the type of the shared object, the mobile phone may adjust content of the shared object based on a control type supported by the insertion location in the second application, to insert the content of the shared object. For example, as shown in an interface 710 shown in FIG. 10(4), a location of a cursor in an email body does not support insertion of a video control but supports insertion of text. In this case, the mobile phone may insert a play address 711 of a shared object of a video type, for example, a uniform resource locator (uniform resource locator, URL). For another example, as shown in an interface 712 shown in FIG. 11, a location of a cursor in an email body does not support insertion of a video control, but supports insertion of a picture. In this case, the mobile phone may obtain all or some image frames in a shared object of a video type, and insert the image frames into the email body, for example, a picture 713 (a quantity of pictures 713 may be one or more) inserted in the interface 712. For other content in this embodiment, refer to descriptions of related content in another scenario.

In some other embodiments, an example in which the operation 3 is a series of actions in which a finger of the user holds a preview of a specific shared object in the sharing application, moves the preview to the interface of the second application, and releases the finger when the finger reaches the insertion location (to be specific, the finger leaves a touchscreen of the mobile phone) is used. In a process in which the finger of the user holds the preview of the specific shared object in the sharing application to move, the mobile phone (for example, specifically, the second application) may also obtain a current location of the finger of the user in real time, determine a control (a control of the second application) corresponding to the current location of the finger, and determine whether the control supports insertion of a type (for example, a video type) and/or a format (for example, mp4 or wmv) of the shared object. If the control supports insertion of a type of a shared object currently selected by the user, the user may be prompted, so that the user can choose whether to release the finger at the current location. To be specific, the shared object is inserted at the current location. If the control does not support the type of the shared object currently selected by the user, the user may be prompted, so that the user does not release the finger at the location of the control. To be specific, the user does not choose to insert the shared object at the current location. For example, when the finger of the user holds a preview of a specific shared object in the sharing application and starts to drag, the preview of the shared object moves along with movement of the finger of the user. When the finger of the user reaches the interface of the second application, if a current location of the finger supports insertion of the shared object, the preview that is of the shared object and that moves along with the finger presents a status 1. If the current location of the finger does not support insertion of the shared object, the preview that is of the shared object and that moves along with the finger presents a status 2, where the status 1 is different from the status 2. For example, compared with the status 1, the status 2 adds a prohibition marker and the like. Alternatively, the status 1 is colored, the status 2 is gray, and the like.

In some other embodiments, when the mobile phone displays the window 706 (to be specific, details about the preview of the shared object in the sharing application are expanded), the mobile phone may further obtain, in real time, a type and/or a format of a shared object that the insertion location in the second application supports inserting. In addition, a preview that is in the shared object displayed in the window 706 and that does not belong to the shared object corresponding to the type and/or the format supported by the insertion location of the second application is set to a non-insertable state (for example, set to be gray). To be specific, the user cannot perform an operation of inserting the shared object in the non-insertable state in the second application. It can be learned that the mobile phone may detect, in real time, whether each control in the second application supports the type and/or the format of the shared object selected by the user, and display a corresponding user prompt to guide the user to select an insertion location, to improve efficiency of interaction between the user and the mobile phone.

It can be learned that, even in some scenarios, when the video control in the first application cannot be selected by the user, the video control that cannot be selected by the user may be shared to another application by using the foregoing solution, thereby expanding an application scenario of information sharing between applications and meeting more sharing requirements of the user.

In addition, when the interface in the second application does not support insertion of the shared object of the video type, a play address, an included image frame, and the like of the shared object of the video type may be inserted. In this way, an application scenario of information sharing between applications is expanded, and more sharing requirements of the user are met.

The shared object includes the combination of the video and the text.

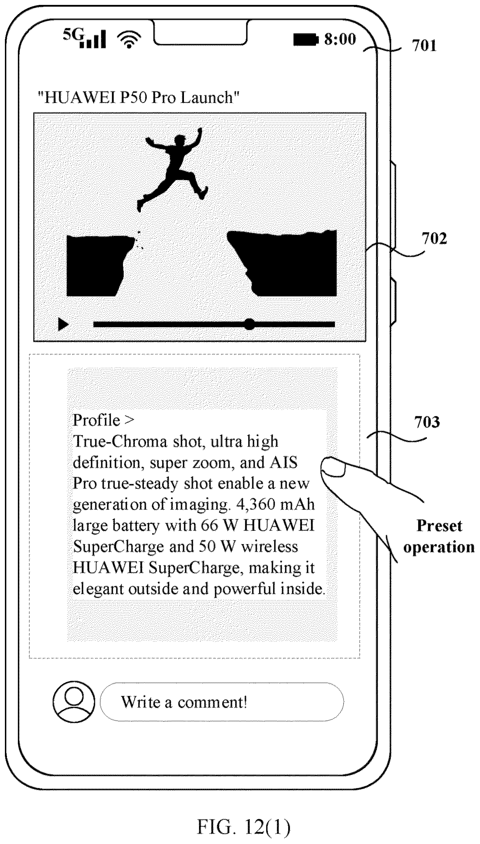

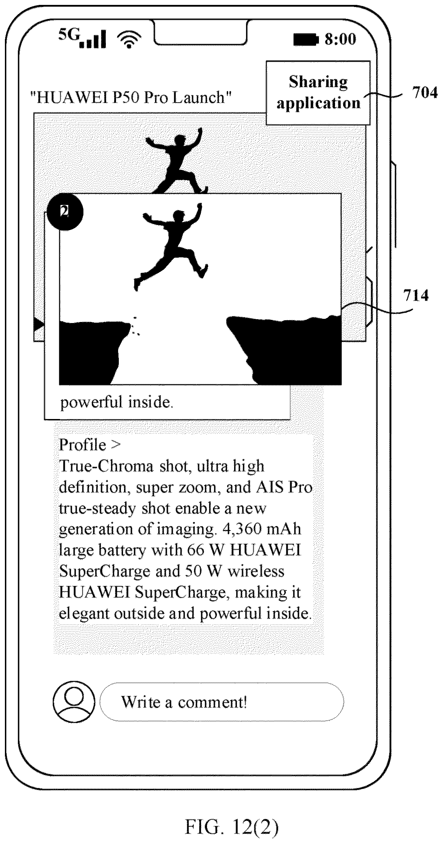

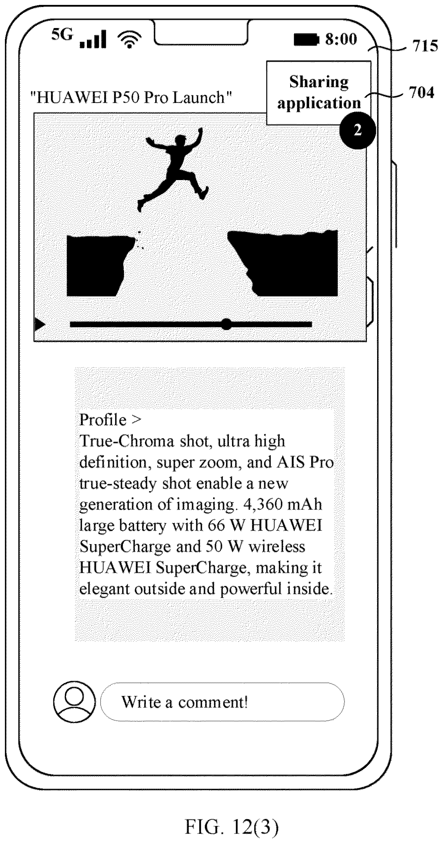

For example, as shown in FIG. 12(1), the mobile phone displays an interface 701 of the first application, and the interface 701 includes a video control 702 and a text control 703. The user selects the video control 702 and the text control 703, and then the user performs a preset operation of triggering a sharing function. In response to detecting an operation performed after the user performs the preset operation, the mobile phone displays an interface shown in FIG. 12(2). The interface includes a window 704, used to prompt that the sharing function is enabled. In addition, the mobile phone generates a preview 714 of selected shared objects (the video control 702 and the text control 703). For a specific implementation of generating the preview 714 by the mobile phone, refer to the foregoing description. Details are not described herein again. Optionally, the preview 714 may prompt a plurality of shared objects (the video control 702 and the text control 703) that are stored this time in a stereoscopic effect manner. Optionally, the preview 714 may use specific animation effect to prompt that the selected shared objects are stored. Optionally, after the animation effect of preview 714 ends, the mobile phone may display an interface 715 shown in FIG. 12(3), and a quantity indicated by a subscript icon of the window 704 is increased by 2, to prompt that a total of two shared objects are stored in the sharing application.

For other content in this embodiment, for example, how to share one or more shared objects from the sharing application to the second application, refer to descriptions of related content in another scenario. Details are not described herein again.

It can be learned that in this embodiment of this application, a plurality of controls of different types may be stored in the sharing application at a time, thereby improving diversity of types of sharing information between applications and improving sharing efficiency.

### Scenario 3: Card or mini program sharing scenario

The technical solutions provided in embodiments of this application may be further used to implement sharing of a shared object of a programmed algorithm type between applications. The shared object of the programmed algorithm type includes, for example, a card (for example, a weather card and a flight card) and a mini program. It may be understood that the shared object of the programmed algorithm type is, in essence, a lightweight application. In this case, the shared object of the programmed algorithm type includes a UI control, logic code between UI controls, a related resource, and the like.

### (1) The shared object includes one or more cards.

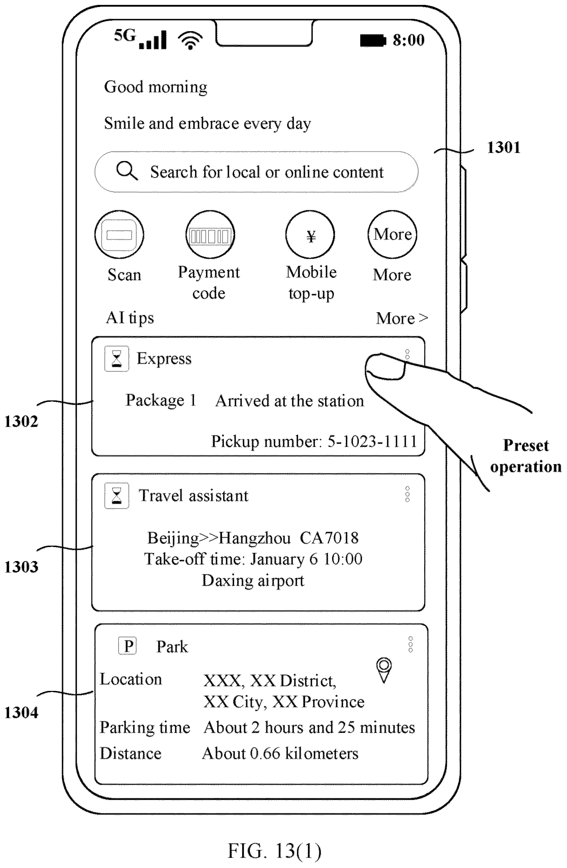

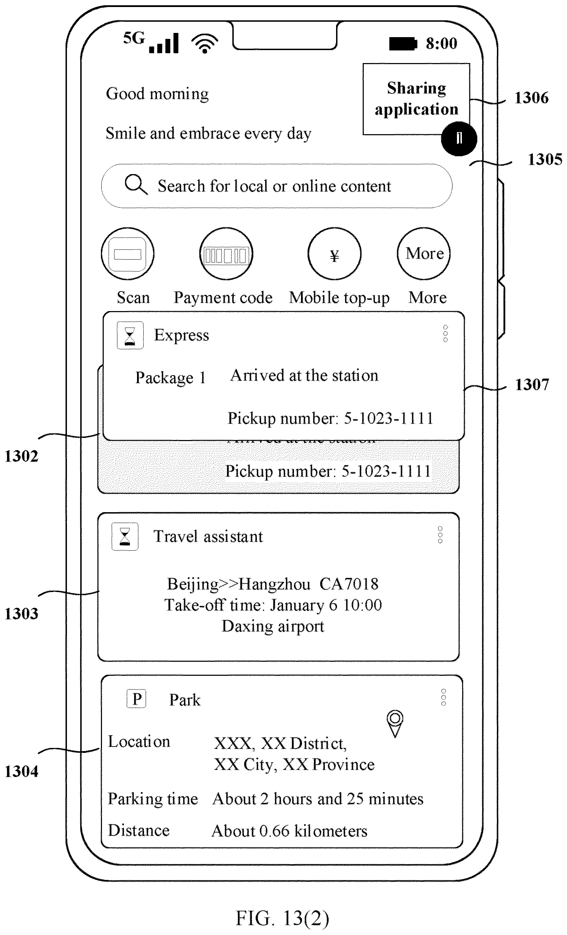

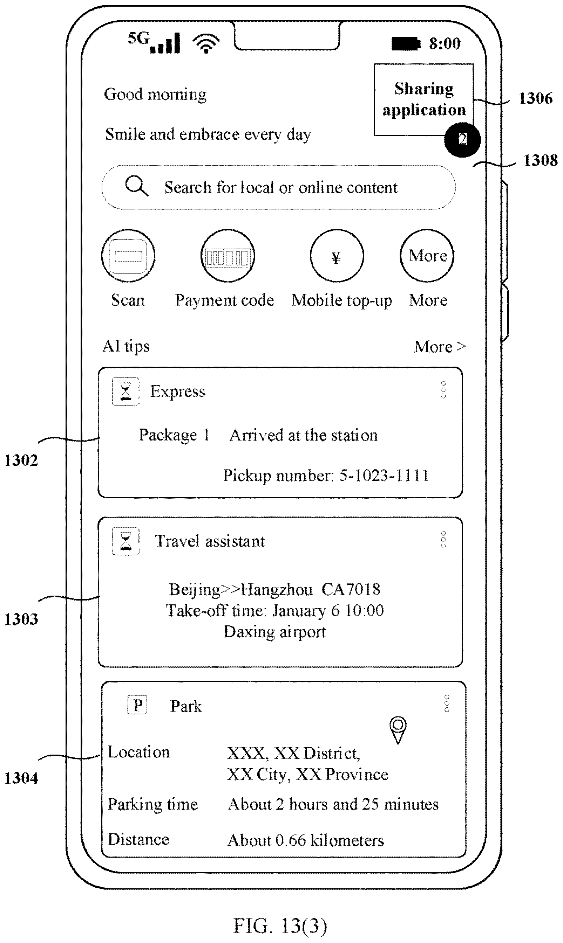

For example, as shown in FIG. 13(1), a user enables a leftmost screen 1301 of a mobile phone. The leftmost screen 1301 includes a plurality of cards of AI tips, for example, an express card 1302 (displaying express information corresponding to a mobile phone number registered by a mobile phone user), a travel assistant card 1303 (displaying travel information corresponding to the mobile phone number registered by the mobile phone user, for example, flight information, train information, and taxi information), and a parking card 1304 (displaying parking information corresponding to a license plate number registered by the mobile phone user). In response to detecting that the user performs a preset operation of triggering a sharing function on the express card 1302, the mobile phone displays an interface 1305 shown in FIG. 13(2), and displays a window 1306 in the interface 1305, to prompt the user that a sharing application is enabled. Optionally, the window 1306 further displays a preview 1307 of the express card (that is, the shared object). Optionally, the preview 1307 may use specific animation effect, for example, moving into an icon 1306 and disappearing, to prompt the user that the express card is stored in the sharing application. In a specific implementation, after detecting that the user performs the preset operation, the leftmost screen 1301 determines, based on a location at which the user performs the preset operation, that the shared object is the express card 1302. Card information (including the UI control, the logic code between UI controls, the related resource, and the like) of the express card 1302 is transferred to the sharing application. The sharing application newly creates an activity, and newly creates a card in the activity. Content of the card is set to be the same as content of the express card 1302. It may be noted that the newly created card in the sharing application and the express card 1302 in the leftmost screen 1301 are independent cards. However, because content of the two cards is the same, content of the newly created card in the sharing application may be consistent with content of the express card 1302 in the leftmost screen 1301. As shown in an interface 1308 in FIG. 13(3), a quantity indicated by a subscript icon of the window 1306 is increased by 1, indicating that a shared object (that is, the express card) is newly added in the sharing application.

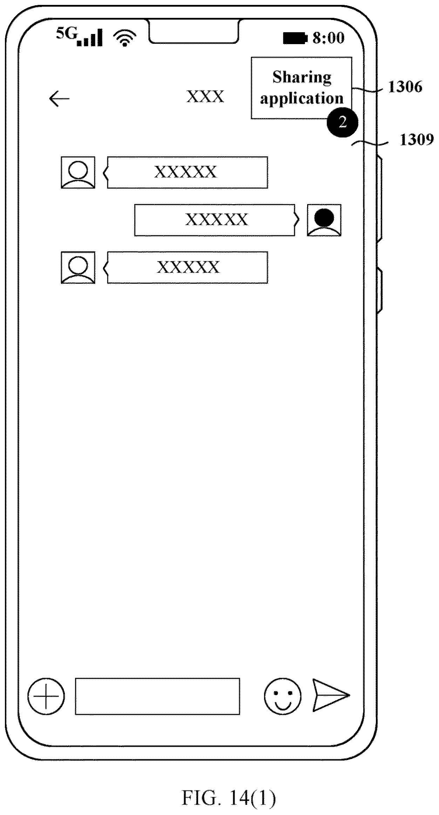

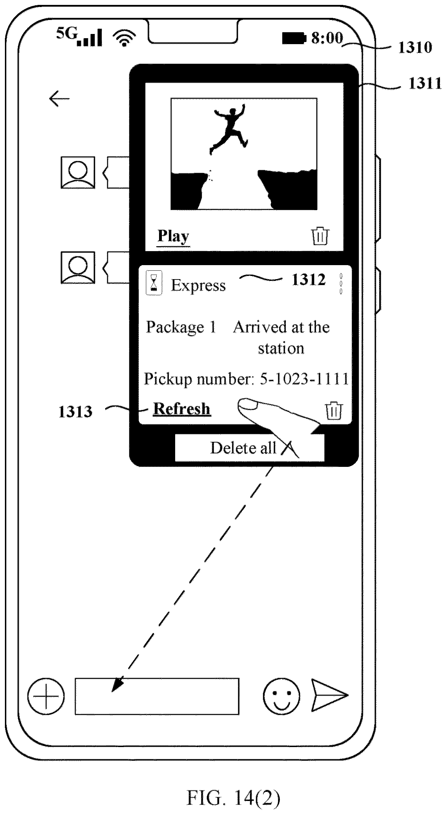

When the user desires to share the shared object to a second application, the user may enable the second application. For example, an interface 1309 shown in FIG. 14(1) is a chat interface after the mobile phone enables an instant messaging application. The user may perform an operation 1, where the operation 1 is used to expand detailed information about the shared object stored in the sharing application. In response to detecting that the user performs the operation 1, the mobile phone displays an interface 1310 shown in FIG. 14(2). The interface 1310 displays a window 1311, and the window 1311 is used to display the detailed information about the shared object stored in the sharing application. The detailed information includes the express card 1312 that is previously stored. It may be noted that the express card 1312 further displays a refresh control 1313 and a delete control that are for the express card. As described above, the express card includes the UI control, the logic code between UI controls, the related resource, and the like. Therefore, the user may refresh content in the express card 1312 by operating the refresh control 1313.

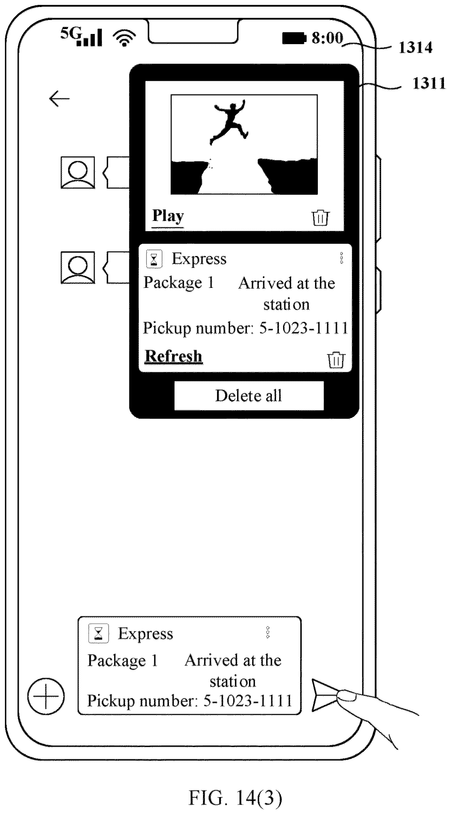

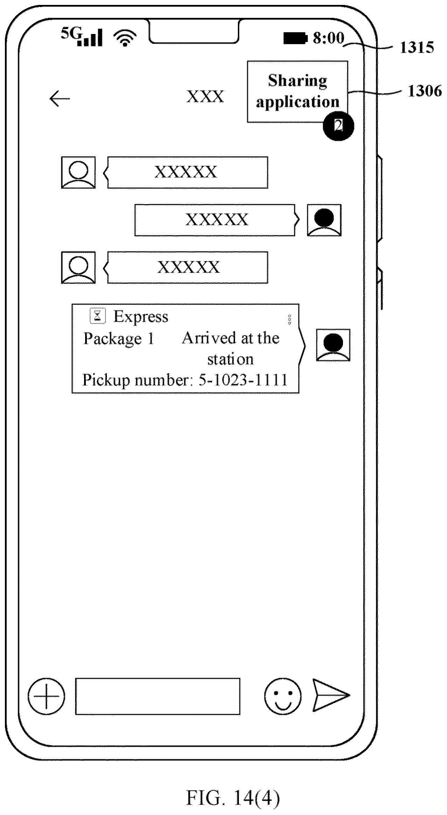

The user may perform an operation 3 on the express card 1312, where the operation 3 is used to share the express card 1312 to the second application (for example, the instant messaging application). In an example, the operation 3 is, for example, holding the express card 1312, and dragging the express card 1312 to an information input box in the interface 1310. In response to detecting that the user performs the operation 3 on the express card 1312, the mobile phone displays an interface 1314 shown in FIG. 14(3). An information input box of the interface 1314 displays a preview of the express card, certainly may display information about the card, or the like, to indicate to share a shared object of a card type to a current interface. In response to detecting that the user operates a send control, the mobile phone displays an interface 1315 shown in FIG. 14(4). The interface 1315 shows that the mobile phone user has sent, to a corresponding contact, the shared object that is shared to the instant messaging application by using an instant messaging application server.

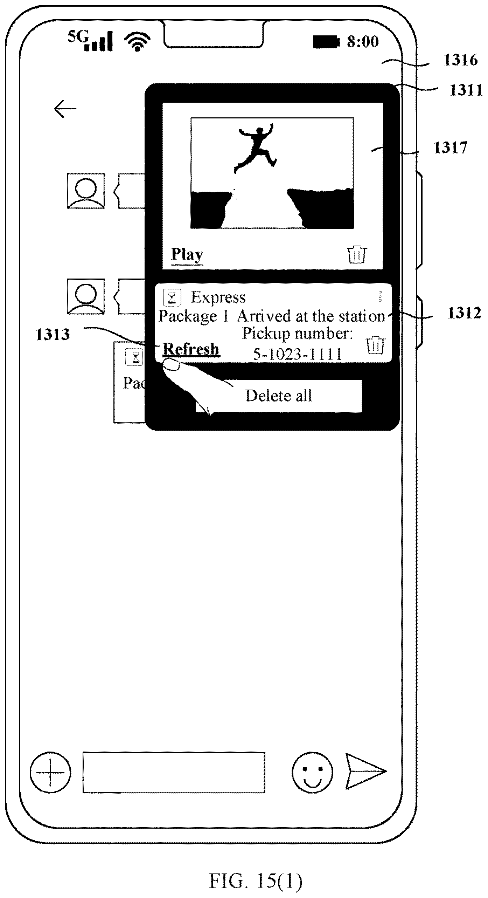

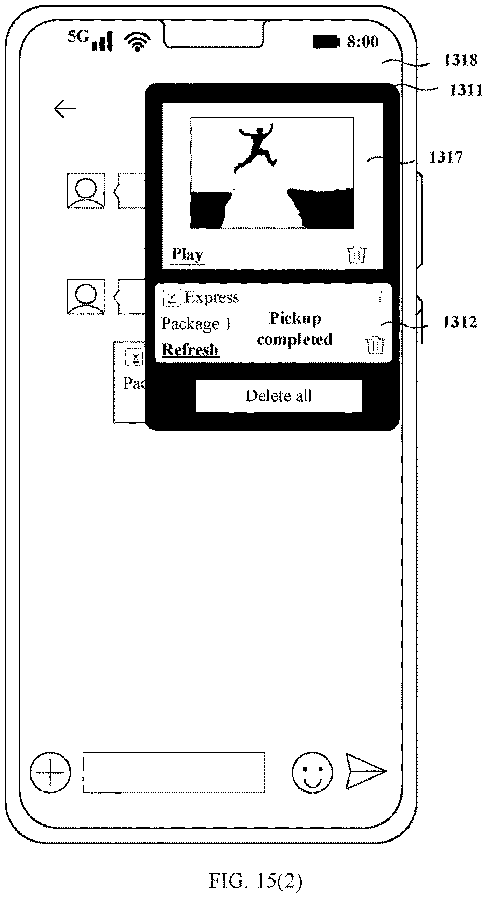

It should be noted that, when the shared object stored in the sharing application is the shared object (for example, the card and the mini program) of the programmed algorithm type, each shared object in the sharing application updates content of the shared object. For example, as shown in an interface 1316 shown in FIG. 15(1), the interface 1316 displays a window 1311. The window 1311 displays each shared object stored in the sharing application, for example, a video control 1317, and the express card 1312. It may be noted that the refresh control 1313 is further displayed in the express card 1312, and may be used to update content of a shared object corresponding to the express card 1312. In response to detecting that the user operates the refresh control 1313, the mobile phone displays an interface 1318 shown in FIG. 15(2). In the window 1311 in the interface 1318, content of the shared object corresponding to the express card 1312 is updated. For example, a state of a package 1 is updated from "Arrived at the station" to "Pickup completed". It may be understood that, after the user shares the shared obj ect to another application, content of the shared object viewed on the another application is correspondingly updated. Certainly, in some other embodiments, the shared object of the programmed algorithm type in the sharing application may be updated in real time by default, or the shared obj ect starts to be updated in real time when the user expands a preview of each shared object stored in the sharing application (to be specific, when the mobile phone displays the window 1311).

It should be further noted that, in some other embodiments, the user needs to share the shared object in the first application to a plurality of second applications. An example in which an express card is shared is used for description. The user stores the shared object of the first application in the sharing application, and then directly shares the shared object to the plurality of second applications by using the sharing application. For a process of storing the shared object of the first application in the sharing application, and sharing the shared object to a first second application (for example, an instant messaging application) by using the sharing application, refer to the foregoing descriptions of FIG. 13(1) to FIG. 13(3) and FIG. 14(1) to FIG. 14(4). Then, the user may directly enable a second second application (for example, an email application), open a new email interface of the email application, and perform, by using the sharing application, the operation 3 on a preview corresponding to the shared object. To be specific, the shared object of the first application is shared to the second application again. The rest can be deduced by analogy. It can be learned that when the shared object in the first application is shared to the plurality of second applications, the sharing method provided in this embodiment of this application helps the user avoid repeated switching between the first application and the plurality of second applications, thereby improving sharing efficiency.

### (2) The shared object includes one or more mini program pages.

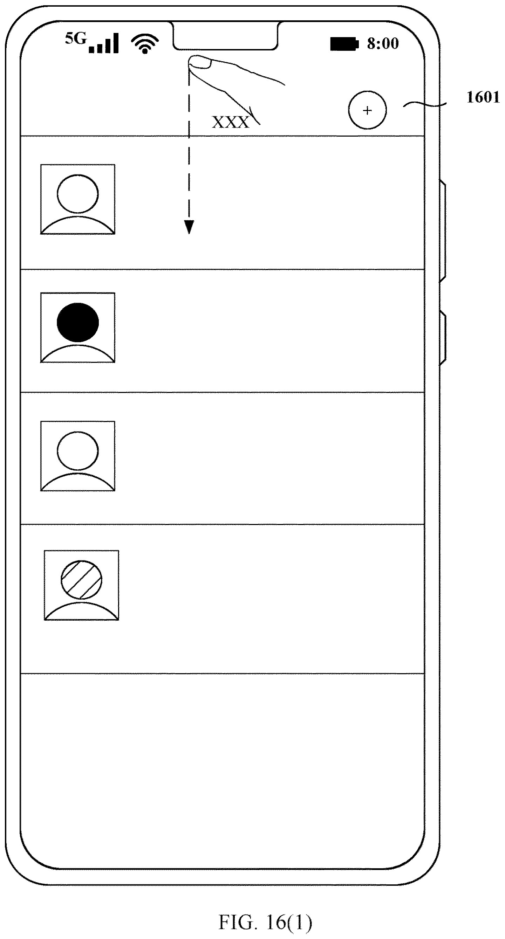

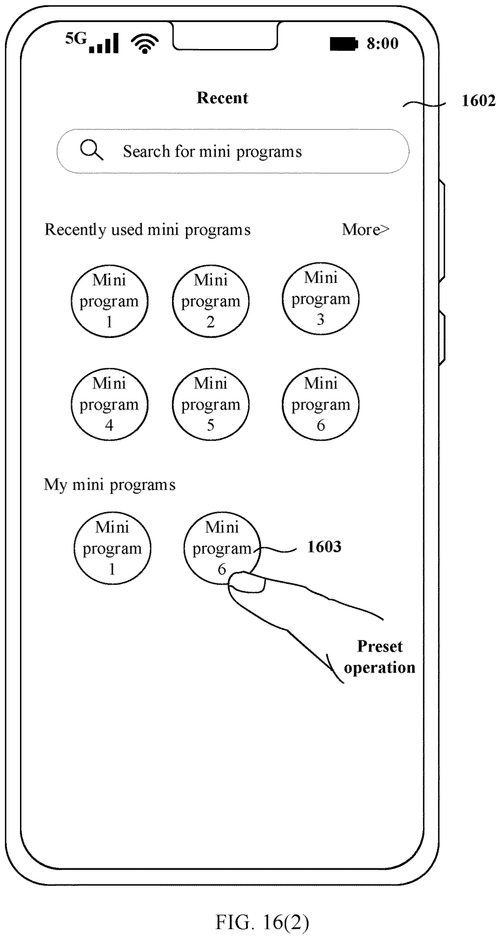

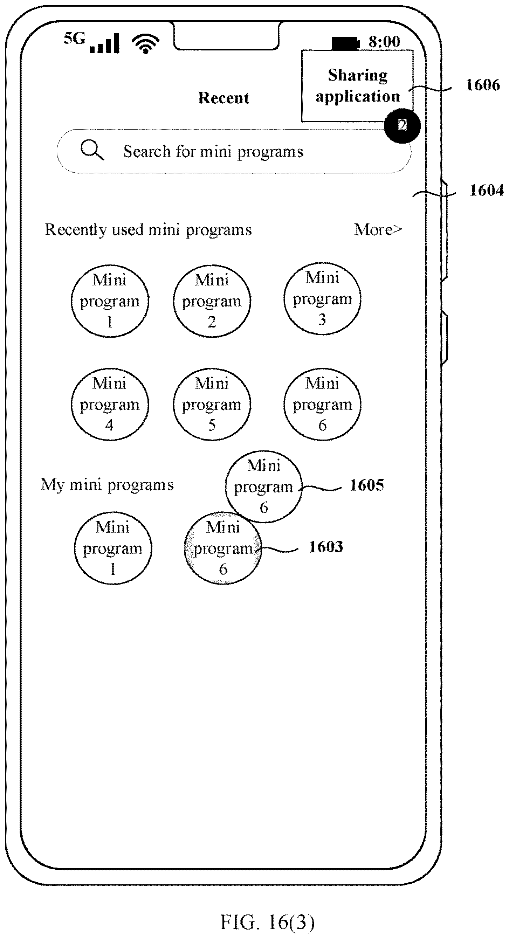

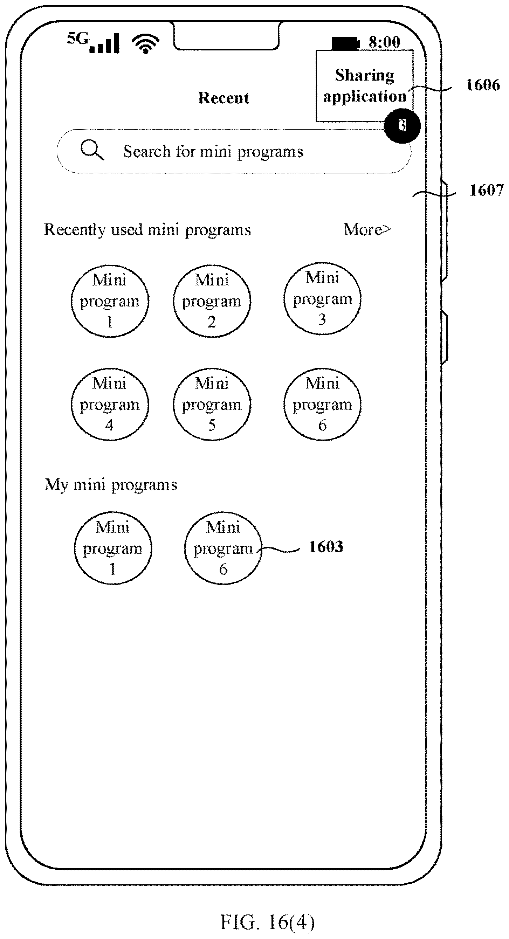

For example, as shown in FIG. 16(1), the mobile phone displays a main interface 1601 of an instant messaging application. In response to detecting that the user performs a pull-down operation (which may also be another operation), the mobile phone displays an interface 1602 shown in FIG. 16(2). The interface 1602 displays icons of a plurality of mini programs, for example, an icon of a recently used mini program and an icon of a mini program that is collected by a mobile phone user. When the user desires to share a mini program between applications, the user may directly perform, at an icon of a corresponding mini program, a preset operation of triggering a sharing function. For example, the user performs the preset operation on an icon 1603 of a mini program 6. In response to detecting that the user performs the preset operation on the icon 1603 of the mini program 6, the mobile phone displays an interface 1604 shown in FIG. 16(3). The interface 1604 may display a window 1606 of the sharing application (in this case, a quantity indicated by a subscript icon of the window 1606 is "2") and an icon 1605 of the mini program 6. Optionally, the icon 1605 of the mini program 6 may use specific animation effect, to prompt the user that the mini program 6 is being stored in the sharing application. A quantity indicated by the subscript icon of the window 1606 of the sharing application in the interface 1607 shown in FIG. 16(4) is increased by 1 (changed to "3 "), indicating that a new shared object is stored in the sharing application. It may be understood that the mobile phone sends a programmed algorithm and the like corresponding to the mini program 6 to the sharing application. The sharing application newly creates an activity, and the activity includes all content (including a UI control, logic code between UI controls, and a related resource, and the like) included in the mini program 6.

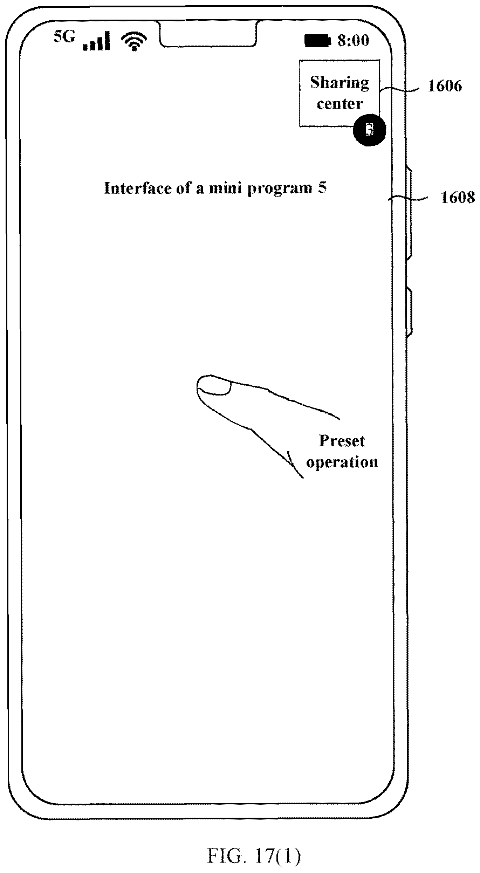

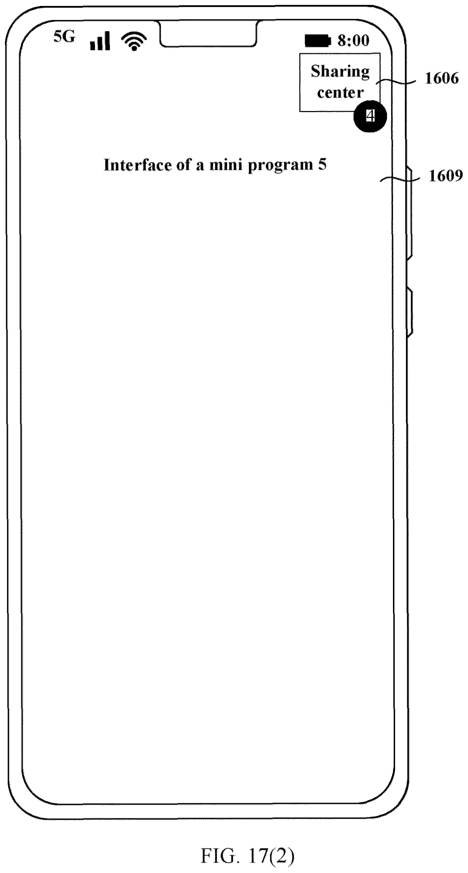

In some other embodiments, the user may alternatively store a current interface of the mini program into the sharing application in an open interface of the mini program. An interface 1608 shown in FIG. 17(1) is an interface of a mini program 5. The interface 1608 further includes the window 1606 of the sharing application. In this case, a quantity indicated by the window 1606 is "3". In response to detecting that the user performs the preset operation in the interface, the mobile phone displays an interface 1609 shown in FIG. 17(2). In this case, the interface 1609 includes the window 1606 of the sharing application. In this case, a quantity indicated by the window 1606 is "4", indicating that a new shared object is stored in the sharing application.

It should be noted that, when the user shares the mini program or an interface of the mini program to the second application by using the sharing application, it may be first determined whether the second application supports insertion of a shared object of a programmed algorithm type. If the second application supports insertion of the shared object of the programmed algorithm type, the shared object of the programmed algorithm type may be directly inserted. For example, a chat interface of the instant messaging application supports insertion of the shared object of the programmed algorithm type. Optionally, in some embodiments, the second application may also display an authorization interface, to prompt the user to authorize the shared object that is of the programmed algorithm type and that is inserted at a current insertion location.

If the second application does not support insertion of the shared object of the programmed algorithm type, a link corresponding to the shared object of the programmed algorithm type may alternatively be inserted, and the user may alternatively enter the shared object of the programmed algorithm type by using the connection in the second application. For example, a new email interface of an email application does not support the shared object of the programmed algorithm type, and may support insertion of the link corresponding to the shared object of the programmed algorithm type. Alternatively, when the second application does not support insertion of the shared object of the programmed algorithm type (for example, the second application does not support a version of the shared object of the programmed algorithm type), the second application may also jump to a download center (for example, an application market), so that the user can download a related shared object of a programmed algorithm type by using the download center.

### Scenario 4: File or folder sharing scenario

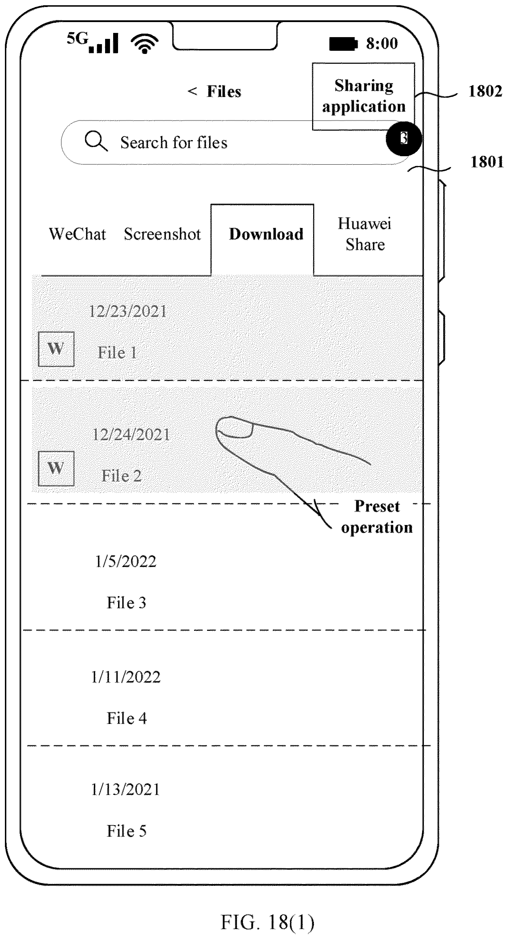

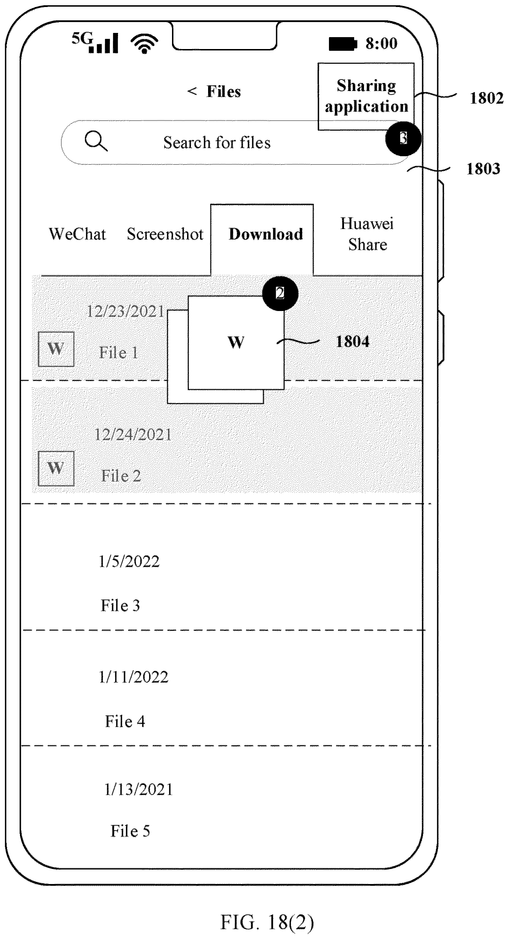

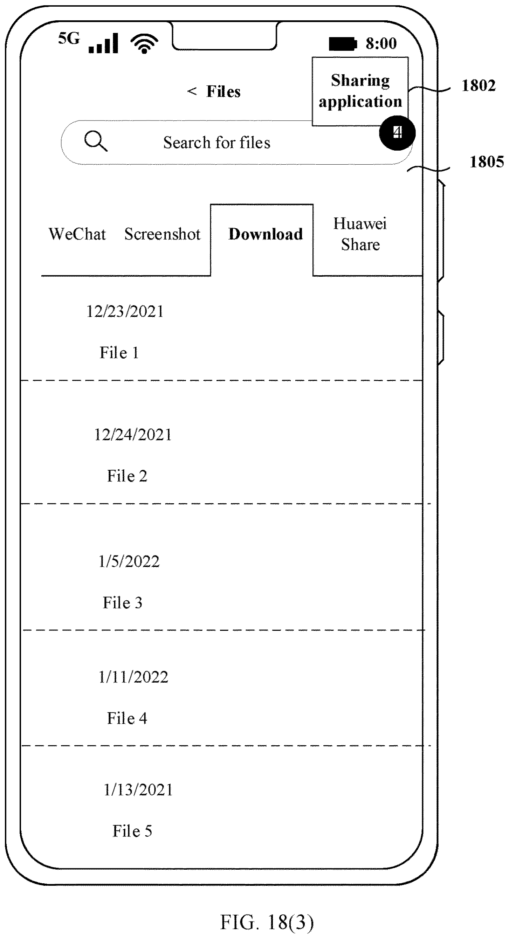

For example, as shown in FIG. 18(1), a mobile phone displays an interface 1801 of files. The interface 1801 includes files in different directories. For example, the interface 1801 displays information about a plurality of files in a download directory, for example, a file creation time/update time, a file type icon, a file name, and the like. Optionally, the interface 1801 may further display a window 1802 of a sharing application. In this case, a quantity of shared objects indicated by the window 1802 is 3. When the user desires to share one or more files between applications, the user may first select one or more to-be-shared files, for example, select a file 1 and a file 2, and then enable a preset operation of a sharing function. In response to detecting that the user performs the preset operation, a first application may obtain storage paths of the selected file 1 and file 2, and send the storage paths of the file 1 and the file 2 to the sharing application. The sharing application may directly obtain original files of the file 1 and the file 2 based on the storage paths of the file 1 and the file 2. Then, the mobile phone displays an interface 1803 shown in FIG. 18(2). A preview 1804 of shared objects (that is, the file 1 and the file 2) is displayed in the interface 1803. In addition, the preview 1804 approaches the window 1802 of the sharing application by using specific animation effect until disappears. Then, the mobile phone displays an interface 1805 shown in FIG. 18(3). In this case, a quantity of shared objects indicated by the window 1802 of the sharing application is 4. To be specific, a new shared object is stored in the sharing application.

### Scenario 5: Cross-device sharing scenario

It should be noted that the foregoing scenario 1 to scenario 4 are described by using an example in which information is shared between different applications on a same terminal 100. Actually, the technical solutions provided in embodiments of this application are also applicable to a scenario in which information is shared between different applications on different terminals 100. In other words, according to the technical solutions provided in embodiments of this application, information (that is, a shared object) about a first application on a terminal may be shared to a second application on the terminal. Alternatively, information (that is, a shared object) about a first application on a terminal may be shared to a second application on another terminal.

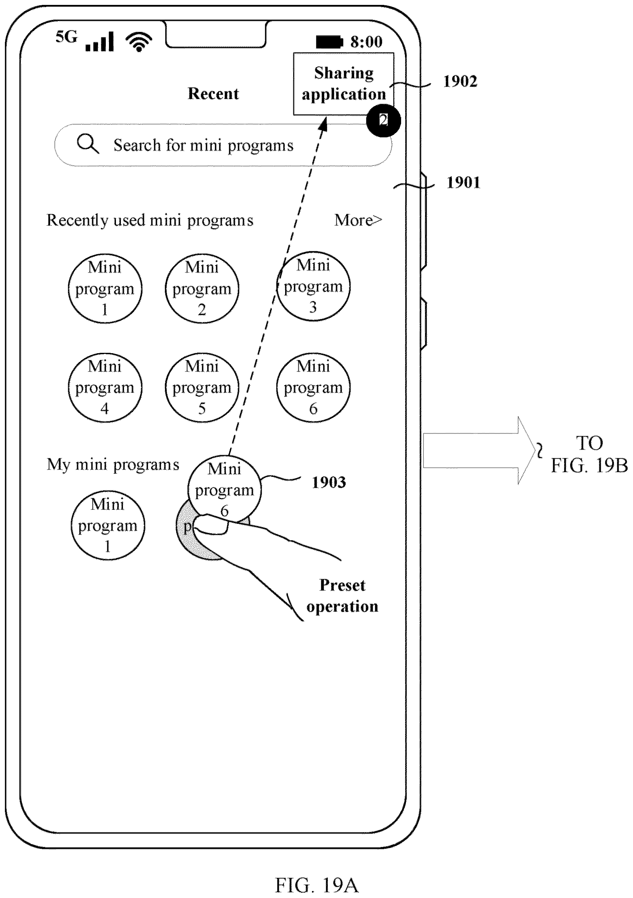

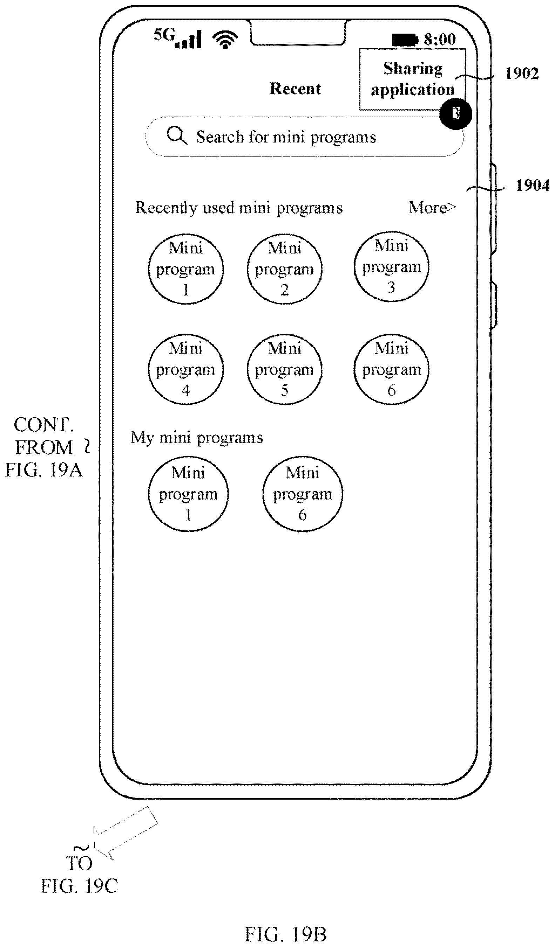

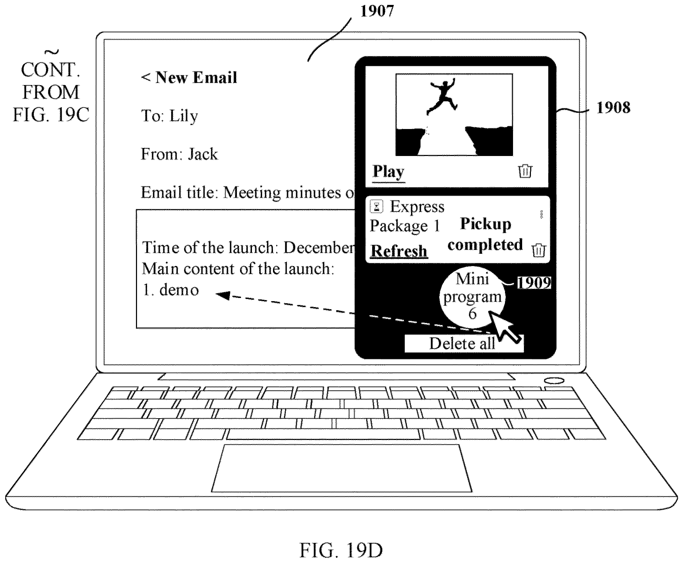

For example, as shown in FIG. 19A, a mobile phone displays an interface 1901 of a first application (for example, a mini program list interface of a WeChat application). In this case, the interface 1901 further displays a window 1902 of a sharing application. In this case, a subscript icon of the window 1902 indicates that a quantity of shared objects included in the sharing application is 2. When the mobile phone detects that a user performs a preset operation on an icon of a mini program 6 in the interface 1901, a preview 1903 of the mini program 6 is generated, and the preview 1903 gradually approaches the window 1902 of the sharing application until disappears. The mobile phone displays an interface 1904. In this case, the subscript icon of the window 1902 of the sharing application indicates that a quantity of shared objects in the sharing application changes to 3. Then, the mobile phone synchronizes change information of a newly added shared object in the sharing application to a computer. It should be noted that the mobile phone and the computer are communicatively connected in advance, and complete mutual authentication. In an example, the mobile phone and the computer log in to a same Wi-Fi network, the mobile phone and the computer log in to a same user account (for example, a Huawei account), the mobile phone and the computer are mutually trusted devices through manual authorization of the user, and/or the like. A process of mutual authentication between the mobile phone and the computer is not limited in this embodiment of this application.

In a specific implementation, the mobile phone and the computer may implement data synchronization in sharing applications between the mobile phone and the computer by using a distributed soft bus technology, that is, synchronization of data of the shared object. Specifically, after the shared object in the sharing application of the mobile phone changes, the mobile phone obtains a list of mutually trusted devices, registers online/offline notifications of the mutually trusted devices, and maintains information about the mutually trusted devices in real time. The mutually trusted devices may be, for example, a device that logs in to a same Wi-Fi network as the mobile phone, a device that logs in to a same user account (for example, a Huawei account) as the mobile phone, a device that is manually authorized by the user to be mutually trusted by the mobile phone, and/or the like. Further, the mobile phone may further filter out a device that does not support sharing of the shared object in the mutually trusted devices. For example, filtered mutually trusted devices include a computer. The sharing application in the mobile phone starts the sharing application in the computer, and sends data that is of the shared object and that is updated by the mobile phone to the computer, so that the sharing application in the computer updates the data of the shared object. It can be learned that the data of the shared object in the sharing application of the mobile phone is consistent with the data of the shared object in the sharing application of the computer. It may be learned that a distributed soft bus provides a unified distributed communication capability for interconnection and intercommunication between a plurality of terminals that are collaboratively displayed, and creates a condition for non-sense discovery and zero-wait transmission between the terminals. In this way, an application developer only needs to focus on implementation of service logic, and does not need to pay attention to a networking mode and an underlying protocol.

Certainly, data synchronization in the sharing applications between the mobile phone and the computer may alternatively be implemented by using another method. For example, after the user updates the shared object in the sharing application by using the mobile phone, the mobile phone sends updated data to a server, and then the server pushes the updated data to the computer, so that information in the sharing application in the computer is consistent with information in the sharing application in the mobile phone. A method for implementing data synchronization in the sharing applications between the mobile phone and the computer is not limited in this embodiment of this application.

It should be further noted that, in some other embodiments, the mobile phone further provides a cancellation mechanism for the preset operation. For example, after the mobile phone detects that the user performs the preset operation, the mobile phone may display a cancel control on the interface, to stop a process of storing the shared object in the sharing application this time. In other words, in an entire process in which the mobile phone stores the shared object of the first application in the sharing application, if it is detected that the user operates the cancel control, the mobile phone stops storing the shared object of the first application in the sharing application. Alternatively, within preset duration (for example, 5 seconds) in which the shared object of the first application is just stored in the sharing application, if it is detected that the user operates the cancel control, the mobile phone may also delete/retract a shared object newly stored in the sharing application this time. For another example, an example in which the preset operation is an action of holding the shared object in the first application and dragging the shared object to the window 1902 of the sharing application is used. When it is detected that the user holds the shared object in the first application and drags the shared object in a direction close to the window 1902 of the sharing application, the mobile phone may have enabled a procedure of storing the shared object in the sharing application. However, when the mobile phone detects that the user does not release a finger when dragging the shared object of the first application to a specific location (for example, an area in which the window 1902 of the sharing application is located), or the user drags the shared object along a direction away from the window 1902 of the sharing application, the mobile phone may stop a procedure of storing the shared object in the sharing application. For another example, after the mobile phone detects that the user performs the preset operation, the mobile phone enables the procedure of storing the shared object in the sharing application. In an entire process in which the mobile phone stores the shared object of the first application in the sharing application, if it is detected that the user operates a specific operation (for example, performs a screen locking operation), the mobile phone stops storing the shared object of the first application in the sharing application. In conclusion, a specific implementation of the cancellation mechanism of the preset operation is not limited in this embodiment of this application.

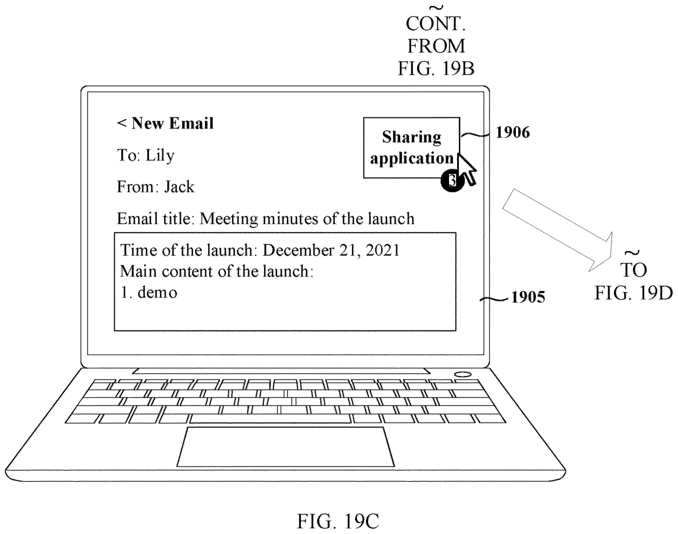

Still refer to FIG. 19C. The computer displays an interface 1905 (for example, a new email interface of an email application) of the second application. It may be noted that, the interface 1905 displays a window 1906 of a sharing application, and in this case, a quantity of shared objects that are in the sharing application and that are indicated by the window 1906 is 3. To be specific, data in the sharing application in the computer is synchronized with data in the sharing application in the mobile phone. In response to operating the window 1906 of the sharing application by the user (for example, clicking by using a left button of a mouse), the computer displays an interface 1907. The sharing application expands a window 1908 in the interface 1907, where the window 1908 includes the shared object stored in the sharing application. In response to detecting that the user operates the mini program 6 (for example, clicking an icon 1909 of the mini program 6 by using the left button of the mouse and dragging the icon 1909 to an insertion location in the second application), the computer inserts the mini program 6 in the second application. Certainly, before inserting the mini program 6 into the interface of the second application, the computer may also determine whether the current insertion location of the second application supports insertion of the mini program 6, and the like. For related content, refer to the foregoing descriptions. Details are not described herein again.

It can be learned that information sharing between applications may also be implemented between the plurality of terminals 100 by using the sharing application, and sharing efficiency is improved.

It should be further noted that embodiments in the foregoing scenarios may be randomly combined when the solutions are not contradictory.

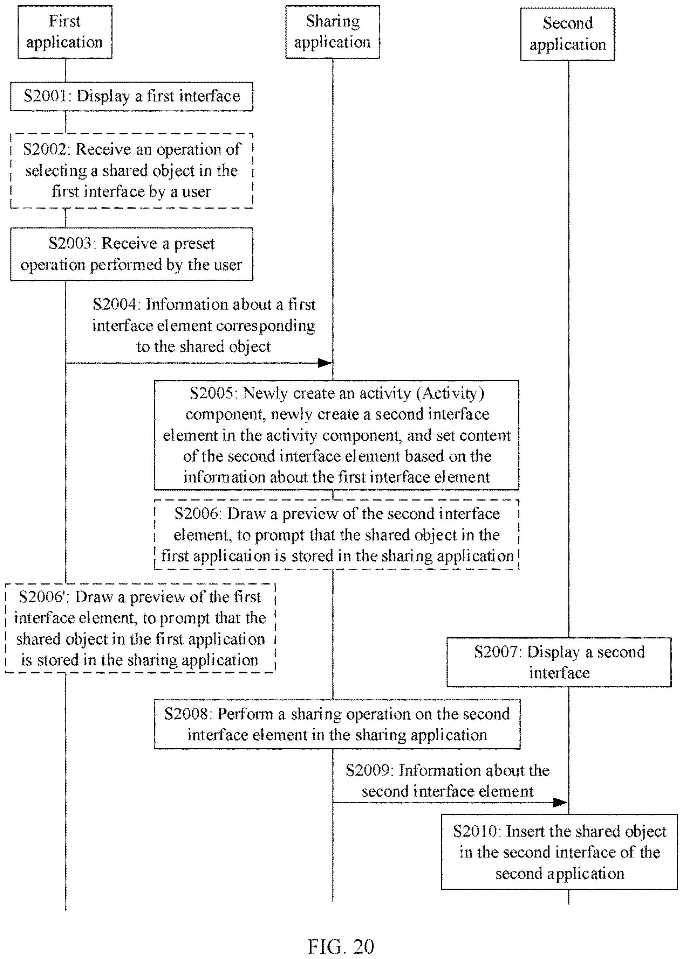

FIG. 20 is a schematic flowchart of an inter-application information sharing method according to an embodiment of this application. The method includes the following steps.

S2001: A first application displays a first interface.

A first terminal enables the first application, and displays the first interface of the first application.

S2002: Receive an operation of selecting a first interface element (that is, a shared object) by a user in the first interface.

The shared object is information that is in the first application and that the user desires to share, and the shared object may be one or more of text, a picture, a video, a card, a mini program, and a file.

In some examples, step S2002 may alternatively be performed after step S2003. Alternatively, step S2002 may not be performed. To be specific, the user does not need to perform the operation of selecting the shared object in the first interface. The first terminal may automatically determine the shared object in the first interface based on a location of a preset operation performed by the user in step S2003. For detailed content, refer to the foregoing description of related content.

S2003: Receive the preset operation performed by the user.

The preset operation is an operation of triggering the first terminal to enable a sharing application, or when the first terminal has enabled a sharing application, the preset operation is used to trigger a procedure of storing a new shared object. The preset operation is, for example, any one of predefined touching and holding, double tapping, gravity pressing, knuckle tapping, drawing a preset pattern (for example, a closed pattern or a pattern of a special letter or character) by a finger, three-finger sliding, dragging, or a mid-air gesture. Optionally, the preset operation may alternatively be inputting a specific voice command or the like. A specific form of the preset operation that triggers the mobile phone to enable the sharing function is not limited in this embodiment of this application.

S2004: The first application sends information about the first interface element to the sharing application.

In some examples, when the first interface element is any one or more of text, a picture, or a video, the information about the first interface element includes content of a corresponding text control, content of a corresponding picture control, content of a corresponding video control, and the like.

In some other examples, when the first interface element is a card or a mini program, the information about the first interface element includes content of a UI control (that is, the first interface element) included in the card or the mini program, logic code between UI controls, a related resource, and the like.

In still some other examples, when the first interface element is a file (for example, a document, a picture, audio, a video, or an executable file) stored in the first terminal, the information about the first interface element includes a storage path corresponding to the file, and the like.

S2005: The sharing application newly creates an activity component, newly creates a second interface element in the activity component, and sets content of the second interface element based on the information about the first interface element. The second interface element includes at least some of content of the first interface element.

It may be understood that the second interface element in the sharing application is a copy of the first interface element in the first application, and the second interface element in the sharing application is independent of the first application.

S2006: The sharing application draws a preview of the second interface element, where the preview of the second interface element uses specific animation effect to prompt the user that the shared object in the first application is stored in the sharing application.

In some other embodiments, in this step, the first application may alternatively draw a preview of the first interface element, and the preview of the first interface element uses specific animation effect to prompt the user that the shared object in the first application is stored in the sharing application. Step S2006' is shown in the figure.

S2007: The second application displays a second interface.

In an example, the first terminal enables the second application, and displays the second interface of the second application. In this scenario, information sharing between different applications on a same terminal (that is, the first terminal) is implemented in subsequent steps.

In another example, a second terminal enables the second application, and displays the second interface of the second application. In this scenario, information sharing between different applications on different terminals (that is, the first terminal and the second terminal) is implemented in subsequent steps.

S2008: The sharing application detects that the user performs a sharing operation on the second interface element.

In a scenario of information sharing between different applications on a same terminal (that is, the first terminal), a sharing application on the first terminal detects that the user performs the sharing operation on the second interface element.

In a scenario of information sharing between different applications on different terminals (that is, the first terminal and the second terminal), a sharing application on the second terminal detects that the user performs the sharing operation on the second interface element. It should be noted that, in this scenario, data (that is, information about the shared object) in the sharing application on the first terminal and data (that is, information about the shared object) in the sharing application on the second terminal are synchronously updated. That is, when the data in the sharing application on the first terminal changes (for example, the first terminal stores the first interface element in the first application into the sharing application), changed data is synchronized to the sharing application on the second terminal.

S2009: The sharing application sends information about the second interface element to the second application.

For the information about the second interface element, refer to the foregoing description of the information about the first interface element.

S2010: The second application inserts a shared object in the second interface based on the information about the second interface element. To be specific, the second interface of the second application displays a third interface element, where the third interface element presents content of the second interface element.

In some examples, the second application may directly insert a third control in the second interface. Content of the third control is consistent with the content of the second interface element. To be specific, the third control is a copy of a second space. For example, the second interface element is a text control, a picture control, a video control, or the like, and the second application may directly insert the text control, the picture control, the video control, or the like in the second interface.

In some other examples, the second application converts the content of the second interface element based on a type of a shared object that the second interface supports inserting. Then, converted content is inserted in the second interface. For example, the second interface element is a video control, a file, or the like, and the second application may insert a play address of a video in the video control, a storage path of the file, or the like in the second interface.

For other content, refer to the description of the foregoing related content. Details are not described herein again.

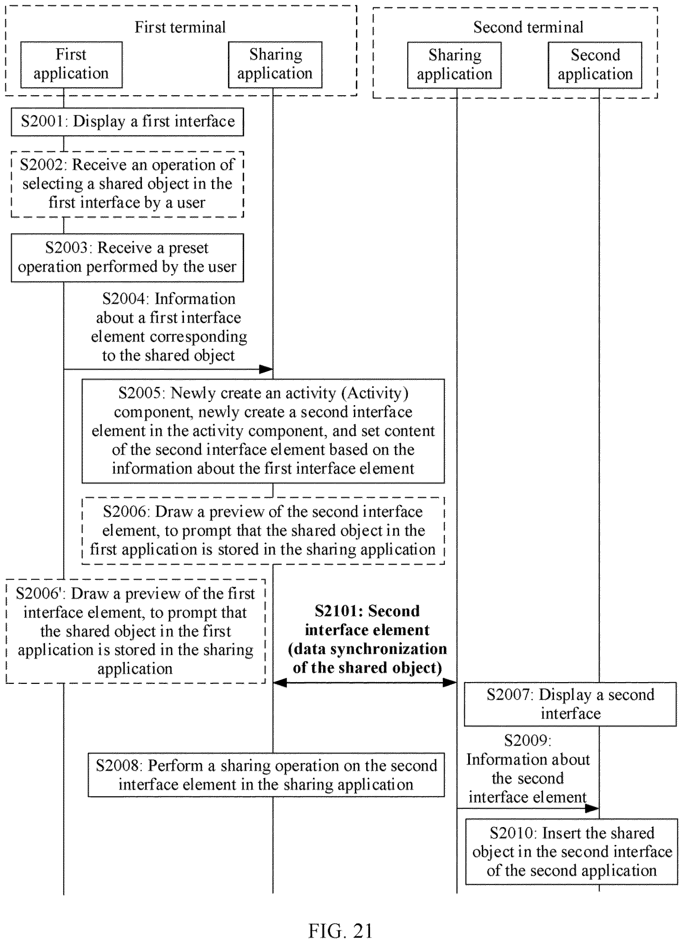

FIG. 21 is a schematic flowchart of another inter-application information sharing method according to an embodiment of this application. The method includes step S2001 to step S2006' step S2101, and step 2007 to step S2010.

It should be noted that after step S2005, after the second interface element is newly created in the sharing application of the first terminal, step S2101 is performed. To be specific, the sharing application of the first terminal may send the second interface element to the sharing application of the second terminal. To be specific, data synchronization of the shared objects in the sharing applications of the first terminal and of the second terminal is implemented. In other words, the sharing application of the second terminal stores the second interface element. An execution sequence between step S2101 and step S2006 and step S2006' in this embodiment of this application.

In addition, when the data of the shared object in the sharing application in the first terminal changes, for example, the user modifies the shared object or deletes the shared object by using the sharing application in the first terminal, the sharing application of the first terminal also synchronizes changed data to the sharing application of the second terminal. Alternatively, when the data of the shared object in the sharing application of the second terminal changes, the sharing application of the second terminal also synchronizes changed data to the sharing application of the first terminal. In other words, the sharing application of the first terminal keeps data synchronization with the sharing application of the second terminal.

It should be further noted that, after performing step S2005, the first terminal may further synchronize the second interface element to more other terminals (including the second terminal) that are of mutually trusted devices of the first terminal and that support the sharing function of the shared object.

For other content, refer to the description of the foregoing related content. Details are not described herein again.

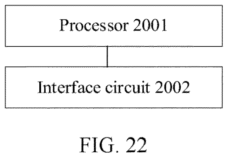

An embodiment of this application further provides a chip system. As shown in FIG. 22, the chip system includes at least one processor 2001 and at least one interface circuit 2002. The processor 2001 and the interface circuit 2002 may be interconnected by using a line. For example, the interface circuit 2002 may be configured to receive a signal from another apparatus (for example, a memory of a terminal 100). For another example, the interface circuit 2002 may be configured to send a signal to another apparatus (for example, the processor 2001). For example, the interface circuit 2002 may read instructions stored in the memory, and send the instructions to the processor 2001. When the instructions are executed by the processor 2001, a terminal may be enabled to perform steps performed by the terminal 100 (for example, a mobile phone) in the foregoing embodiments. Certainly, the chip system may further include another discrete component. This is not specifically limited in this embodiment of this application.

An embodiment of this application further provides an apparatus. The apparatus is included in a terminal, and the apparatus has a function of implementing behavior of the terminal in any method in the foregoing embodiments. The function may be implemented by hardware, or may be implemented by executing corresponding software by hardware. The hardware or the software includes at least one module or unit corresponding to the foregoing function, for example, a detection module or unit, a display module or unit, a determining module or unit, and a computing module or unit.

An embodiment of this application further provides a computer storage medium, including computer instructions. When the computer instructions are run on a terminal, the terminal is enabled to perform any method in the foregoing embodiments.

An embodiment of this application further provides a computer program product. When the computer program product runs on a computer, the computer is enabled to perform any method in the foregoing embodiments.

An embodiment of this application further provides a graphical user interface on a terminal. The terminal has a display, a camera, a memory, and one or more processors. The one or more processors are configured to execute one or more computer programs stored in the memory. The graphical user interface includes a graphical user interface displayed when the terminal performs any method in the foregoing embodiments.

It may be understood that to implement the foregoing functions, the terminal includes corresponding hardware structures and/or corresponding software modules for performing the functions. It should be readily appreciated by a person skilled in the art that the example units, algorithms, and steps described with reference to embodiments disclosed in this specification can be implemented in embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, the terminal or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

The foregoing descriptions about implementations allow a person skilled in the art to understand that, for the purpose of convenient and brief description, division of the foregoing function modules is taken as an example for illustration. During actual application, the foregoing functions can be allocated to different modules and implemented based on a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in embodiments of this application essentially, or the part contributing to a conventional technology, or all or some of the technical solutions may be implemented in a form of a software product. The computer software product is stored in a storage medium and includes a plurality of instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An inter-application information sharing method, applied to a terminal, wherein the method comprises:
displaying, by the terminal, a first interface of a first application, wherein the first interface comprises a first interface element;
detecting, by the terminal, a first operation performed on the first interface element;
displaying, by the terminal, a first window in response to detecting the first operation, wherein the first window displays a fourth interface of a third application, the fourth interface prompts that the third application is enabled, and the first interface element of the first application is stored in the third application;
detecting, by the terminal, a second operation, wherein the second operation is used to enable a second application or switch to a second interface of the second application;
displaying, by the terminal, the second interface of the second application in response to detecting the second operation; and further displaying, by the terminal, the first window, wherein the first window displays a fifth interface of the third application, the fifth interface of the third application comprises a second interface element, and the second interface element comprises at least a part of content of the first interface element;
receiving a third operation performed by a user on the second interface element in the first window; and
displaying, by the terminal, a third interface of the second application in response to receiving the third operation, wherein the third interface comprises a third interface element, the third interface element is used to present content of the second interface element, and the third interface element is the same as or different from the second interface element.

2. The method according to claim 1, wherein before the first window displays the fifth interface of the third application, the method further comprises:
detecting, by the terminal, a fourth operation performed by the user on the first window, wherein the fourth operation is used to display an interface element in the third application.

3. The method according to claim 1 or 2, wherein the method further comprises:
receiving a fifth operation performed by the user on the second interface element in the first window, wherein the fifth operation is different from the third operation; and
displaying, by the terminal, a sixth interface of the third application in response to receiving the fifth operation of the user, wherein the sixth interface is used to edit the second interface element in the third application.

4. The method according to any one of claims 1 to 3, wherein the method further comprises:
receiving a sixth operation performed by the user on the first window, wherein the sixth operation is used to exit the third application; and
skipping displaying, by the terminal, the first window in response to receiving the sixth operation.

5. The method according to any one of claims 1 to 4, wherein
when the second interface of the second application supports insertion of an interface element of a type corresponding to the second interface element, the third interface element is the same as the second interface element; or
when the second interface of the second application does not support insertion of the interface element of the type corresponding to the second interface element, the third interface element is an interface element obtained after the third application or the second application performs conversion based on the second interface element.

6. The method according to any one of claims 1 to 5, wherein
the first interface element comprises a text control; and
the second interface element comprises a text control, wherein the second interface element comprises a part of text in the first interface element, and composition of text in the second interface element is different from composition of text in the first interface element.

7. The method according to claim 6, wherein
composition of text in the third interface element is different from the composition of the text in the second interface element.

8. The method according to any one of claims 1 to 5, wherein the first interface element comprises a text control and a picture control, and the second interface element comprises a text control and a picture control.

9. The method according to any one of claims 1 to 5, wherein the first interface element comprises a video control; and the second interface element comprises a video control, wherein a state of a video in the second interface element is the same as a state of a video in the first interface element, and the state of the video comprises at least one of a playback state, a non-playback state, or a playback progress.

10. The method according to claim 9, wherein
when the second interface of the second application supports insertion of an interface element of a video type, the third interface element comprises a video control; or
when the second interface of the second application does not support insertion of the interface element of the video type, the third interface element comprises a video link or at least one picture control.

11. The method according to any one of claims 1 to 5, wherein the first interface element comprises a card and/or a mini program, the second interface element comprises a card and/or a mini program, and data of the card and/or the mini program in the first interface element is the same as data of the card and/or the mini program in the second interface.

12. The method according to claim 11, wherein
the third interface element comprises a card and/or a mini program, and data of the card and/or the mini program in the third interface element is the same as the data of the card and/or the mini program in the first interface element.

13. The method according to any one of claims 1 to 12, wherein the displaying, by the terminal, a first window in response to detecting the first operation comprises:
enabling, by the terminal, the third application in response to detecting the first operation; sending, by the first application, information about the first interface element to the third application; and generating, by the third application, the second interface element based on the information about the first interface element, wherein
the information about the first interface element comprises one or more of a type of the first interface element, a location of the first interface element in the first interface, content of the first interface element, and a state of the first interface element, and the state of the interface element comprises a selected state and an unselected state.

14. A terminal, comprising a processor, a memory, and a touchscreen, wherein the memory and the touchscreen are coupled to the processor, the memory is configured to store computer program code, the computer program code comprises computer instructions, and when the processor reads the computer instructions from the memory, the terminal is enabled to perform the inter-application information sharing method according to any one of claims 1 to 13.

15. A computer-readable storage medium, comprising computer instructions, wherein when the computer instructions are run on a terminal, the terminal is enabled to perform the inter-application information sharing method according to any one of claims 1 to 13.
